# EUROPÄISCHE PATENTSCHRIFT

(11) **EP 1 307 330 B1**
(45) Veröffentlichungstag und Bekanntmachung des Hinweises auf die Patenterteilung: **10.03.2004**
(21) Anmeldenummer: 01954049.1
(22) Anmeldetag: 20.07.2001
(51) Int. Cl.: B29C 45/67, B29C 45/70, B29C 45/68

(54) **ANTRIEBSVORRICHTUNG, INSBESONDERE FÜR DIE SCHLIESSEINHEIT, DIE EINSPRITZEINHEIT ODER DIE AUSWERFER EINER KUNSTSTOFFSPRITZGIESSMASCHINE**
DRIVE MECHANISM, PARTICULARLY FOR A CLOSING UNIT, AN INJECTION UNIT OR AN EJECTOR OF A PLASTIC INJECTION MOULDING MACHINE
DISPOSITIF D'ENTRAINEMENT, NOTAMMENT POUR L'UNITE DE FERMETURE, L'UNITE D'INJECTION OU LES EJECTEURS D'UNE PRESSE D'INJECTION DE MATIERES PLASTIQUES

(30) Priorität: 08.08.2000 DE 10039513; 18.09.2000 DE 10046461; 31.10.2000 DE 10053889
(43) Veröffentlichungstag der Anmeldung: 07.05.2003
(73) Patentinhaber: Bosch Rexroth AG, 70184 Stuttgart (DE)
(72) Erfinder: DANTLGRABER, Jörg, 97816 Lohr am Main (DE)
(86) Internationale Anmeldenummer: PCT/EP2001/008380
(87) Internationale Veröffentlichungsnummer: WO 2002/011970

(56) Entgegenhaltungen:
- EP-A- 0 342 235
- DE-A- 4 111 594
- US-A- 4 030 299
- US-A- 5 129 806

## Beschreibung

Die Erfindung betrifft eine Antriebsvorrichtung, die insbesondere für die Schließeinheit oder die Einspritzeinheit oder die Auswerfer einer Kunststoffspritzgießmaschine verwendet werden soll und die die Merkmale aus dem Oberbegriff des Patentanspruchs 1 aufweist.

Innerhalb der Schließeinheit einer Kunststoffspritzgießmaschine bewegt die Antriebsvorrichtüng die bewegliche Formaufspannplatte der Maschine. Eine solche Antriebsvorrichtung hat zwei wichtige unterschiedliche Forderungen zu erfüllen. Zum einen soll sie die Formaufspannplatte zum Schließen und zum Öffnen der Form möglichst schnell verfahren, damit die Zykluszeit für die Herstellung eines Formstücks klein gehalten werden kann. Zum andern soll sie die Formaufspannplatte und damit die ganze Form gegen den hohen Spritzdruck mit großer Kraft zuhalten können. Zum einen sind also Stellbewegungen mit hoher Geschwindigkeit auszuführen, zum andern sind ohne wesentliche Bewegung höhe Kräfte auszuüben. Derartige Anforderungen können sich außer bei der Schließeinheit auch bei den Auswerfern oder der Einspritzeinheit einer Kunststoffspritzgießmaschine stellen. Zum Beispiel wird beim Einspritzen von Kunststoff in die Form die Plastifizierschnecke mit relativ hoher Geschwindigkeit in Richtung auf die Form zu bewegt, bis die Form vollständig mit Kunststoff gefüllt ist. Wird im Anschluß daran die sich in der Form befindliche Kunststoffschmelze einem sogenannten Nachdruck ausgesetzt, so muß der Antrieb eine hohe Kraft ohne wesentliche Bewegung der Plastifizierschnecke aufbringen.

Aus der US-A 4 030 299 ist ein rein hydraulischer Antrieb für die bewegbare Formaufspannplatte einer Kunststoffspritzgießmaschine bekannt, der auch eine hydraulische Einrichtung zur Kraftübersetzung (einen hydraulischen Kraftübersetzer) enthält. Dieser weist einen bewegbaren Hydraulikkolben kleiner Wirkfläche, einen weiteren bewegbaren Hydraulikkolben großer Wirkfläche und einen Zylinder auf, der zusammen mit den Hydraulikkolben einen mit einer Druckflüssigkeit gefüllten Zylinderraum einschließt. Der Zylinder ist ortsfest am Gestell der Spritzgießmaschine angeordnet. Zu dem Antrieb gehören außerdem von einer Hydraulikpumpe gespeiste Hydraulikzylinder, die zum Schließen und Öffnen der Form die bewegbare Formaufspannplatte verfahren. Im geöffneten Zustand der Form ist das Volumen des Zylinderraums des hydraulischen Kraftübersetzers minimal.
Wird nun die bewegbare Formaufspannplatte von den Hydraulikzylindem im Sinne eines Schließens der Form verfahren, so wird der große Hydraulikkolben des hydraulischen Kraftübersetzers mitgenommen, wobei sich das Volumen des Zylinderraums des hydraulischen Kraftübersetzers vergrößert und Druckmittel aus einem Behälter über ein Nachsaugventil in den Zylinderraum einströmt. Wenn die bewegliche Formaufspannplatte ihre vordere Endstellung erreicht hat, schließt das Nachsaugventil. Dem Zylinderraum des hydraulischen Kraftübersetzers wird von einer zweiten Hydraulikpumpe über ein Wegeventil weiter Druckmittel zugeführt, wodurch der Druck in dem Zylinderraum ansteigt Wenn ein bestimmter Druck erreicht ist, wird das Wegeventil umgeschaltet und einem den kleinen Hydraulikkolben des hydraulischen Kraftübersetzers betätigenden Hydraulikzylinder von der zweiten Hydraulikpumpe Druckmittel zugeführt. Der kleine Hydraulikkolben fährt in den Zylinderraum hinein, in dem ein hoher Druck erzeugt wird, der über die große Wirkfläche des großen Hydraulikkolbens eine hohe Schließkraft bewirkt. Bei der Antriebsvorrichtung nach der US-A 4 030 299 sind also für die Stellbewegung der bewegbaren Formaufspannplatte und für die Ausübung einer hohen Kraft verschiedene hydraulische Antriebskomponenten vorhanden.

Eine Antriebsvorrichtung mit den Merkmalen aus dem Oberbegriff des Patentanspruchs 1 ist aus der DE 41 11 594 A1 bekannt. Bei dieser Antriebsvorrichtung ist mit der beweglichen Formaufspannplatte eine Kolben-Zylinder-Einheit mit einem Hydraulikkolben von großer Wirkfläche fest verbunden. Die Einheit aus beweglicher Formaufspannplatte und Kolben-Zylinder-Einheit kann von einem Elektromotor über ein Getriebe, das eine Hubspindel und eine Spindelmutter umfaßt, verfahren werden, um die Form schnell zu schließen und schnell zu öffnen. Die hohe Schließkraft wird durch Druckbeaufschlagung der mit der Formaufspannplatte verfahrbaren Kolben-Zylinder-Einheit aufgebracht. Dabei wird die gesamte Reaktionskraft über die Spindel und die Spindelmutter auf das Maschinengestell abgeleitet. Die Kunststoffspritzgießmaschine nach der DE 41 11 594 A1 ist außer mit den Komponenten des elektrischen Antriebs auch mit einem vollständigen hydraulischen System einschließlich Ölbehälter, Pumpe, Ventilen und Kolben-Zylinder-Einheit ausgestattet.

Auch die EP-A-342 235 zeigt eine gattungsgemäße Antriebsvorrichtung.

Der Erfindung liegt die Aufgabe zugrunde, eine Antriebsvorrichtung, die die Merkmale aus dem Oberbegriff des Patentanspruchs 1 aufweist, so weiterzuentwikkein, daß mit geringem Aufwand einerseits eine schnelle Stellbewegung möglich ist und andererseits auch eine große Kraftwirkung erzielt werden kann.

Das gesetzte Ziel wird dadurch erreicht, daß die Antriebsvorrichtung erfindungsgemäß die Merkmale aus dem kennzeichnenden Teil des Patentanspruchs 1 aufweist. Bei einer solchen Antriebsvorrichtung wird für eine Stellbewegung des bewegbares Gliedes der Schließeinheit, der Auswerfereinheit oder der Einspritzeinheit durch das Verfahren des großen zweiten Hydraulikkolbens viel Druckmittel aus dem zweiten Zylinderraum in den ersten Zylinderraum verdrängt und dadurch der erste Hydraulikkolben mit hoher Geschwindigkeit bewegt. Für die Stellbewegung, insbesondere für die Stellbewegung eines bewegbaren Gliedes der Schließeinheit oder der Auswerfereinheit, ist nur eine geringe Kraft notwendig, so daß die Wirkfläche des zweiten Hydraulikkolbens im Bereich der Größe der Wirkfläche des ersten Hydraulikkolbens liegen kann und die Wegstrecke, die das Ausgangselement der elektromotorischen Antriebseinheit während der Stellbewegung zurückzulegen hat, etwa dem Weg des bewegbaren Glieds entspricht. Zum Ausüben der hohen Kraft wird nur der dritte Hydraulikkolben bewegt, wobei der dadurch im ersten Zylinderraum sich aufbauende hohe Druck aufgrund des geschlossenen Ventils zwischen dem ersten und dem zweiten Zylinderraum nicht auf den zweiten Hydraulikkolben und damit auch nicht auf das Ausgangselement des elektromotorischen Antriebs wirken kann, so daß dieser in der Lage ist, den dritten Hydraulikkolben zu bewegen. Außer den drei Kolben-Zylinder-Einheiten und dem Ventil sind sonstige hydraulische Komponenten für eine erfindungsgemäße Antriebsvorrichtung nicht notwendig.

Es sei außerdem hier darauf hingewiesen, daß in den Patentansprüchen zwar von einer Bewegung eines Hydraulikkolbens gesprochen wird, daß damit aber immer eine relative Bewegung zwischen einem Hydraulikkolben und dem entsprechenden Zylindergehäuse gemeint ist, die auch dadurch erreicht werden kann, daß der Hydraulikkolben ortsfest zum Maschinengestell angeordnet ist und das Zylindergehäuse relativ zum Maschinengestell bewegt wird.

Grundsätzlich ist es denkbar, anstelle des Ventils auch eine mechanische Blokkiereinrichtung vorzusehen, die den zweiten Hydraulikkolben nach dessen Verschiebung gegen eine von dem hohen Druck im ersten Zylinderraum auf ihn ausgeübte Kraft abstützt, so daß diese Kraft ebenfalls nicht auf das Ausgangselement des elektromotorischen Antriebs wirkt. Allerdings erscheint der Aufwand für ein Ventil geringer als für eine mechanische Blockiereinrichtung. Außerdem müßte eine mechanische formschlüssige Blockiereinrichtung einstellbar sein, um unterschiedliche Stellwege abdecken zu können.

Es sei hier darauf hingewiesen, daß die dritte Kolben-Zylinder-Einheit eine solche sein kann, daß sie von der ersten Kolben-Zylinder-Einheit augenfällig zu unterscheiden ist. Erste und dritte Kolben-Zylinder-Einheit können jedoch auch weitgehend ineinander integriert sein. So kann der dritte Hydraulikkolben als Plungerkolben in den ersten Zylinderraum hineinragen. Dieser ist dann auch als dritter Zylinderraum zu betrachten. Als drittes Zylindergehäuse könnte der zur Führung und Abdichtung des dritten Hydraulikkolbens dienende Teil des ersten Zylindergehäuses betrachtet werden.

Vorteilhafte Ausgestaltungen einer erfindungsgemäßen Antriebsvorrichtung kann man den Unteransprüchen entnehmen.

So ist es günstig, wenn das Ventil gemäß Patentanspruch 2 ein Sitzventil ist, durch das der erste Zylinderraum zum zweiten Zylinderraum hin leckagefrei absperrbar ist. Dann geht keinerlei vom dritten Hydraulikkolben verdrängtes Druckmittel verloren und im zweiten Zylinderraum erhöht sich der Druck nicht.

Bevorzugt sind gemäß Patentanspruch 3 die zweite Kolben-Zylinder-Einheit und die dritte Kolben-Zylinder-Einheit, die ja beide einen vom Elektromotor zu bewegenden Hydraulikkolben enthalten, zu einer gemeinsam handhabbaren Baueinheit zusammengefaßt. Dann ist der dritte Hydraulikkolben zum Beispiel nicht im ersten Zylindergehäuse geführt.

In besonders bevorzugter Weise sind gemäß den Patentansprüchen 4 die zweite Kolben-Zylinder-Einheit und die dritte Kolben-Zylinder-Einheit achsgleich zueinander angeordnet, so daß sich eine Verschiebung der beiden entsprechenden Hydraulikkolben mit nur einem geradlinig bewegbaren Ausgangselement des elektromotorischen Antriebs relativ einfach bewerkstelligen läßt. Dabei ist die Ausgestaltung auch hinsichtlich des nötigen Bauraums besonders günstig.

Gemäß Patentanspruch 5 ist der erste Hydraulikkolben vom Elektromotor in zwei entgegengesetzte Richtungen bewegbar. Der Elektromotor dient also zum Beispiel bei einer Verwendung an der Schließeinheit nicht nur zum Schließen und zum Verriegeln, sondern auch zum Öffnen der Form. Dazu ist in besonders einfacher Weise gemäß Patentanspruch 6 der erste Hydraulikkolben ein Differenzkolben mit einem der ersten Wirkfläche abgelegenen ersten ringförmigen Zylinderraum und der zweite Hydraulikkolben ist ein Differenzkolben mit einem der zweiten Wirkfläche abgelegenen zweiten ringförmigen Zylinderraum. Die beiden ringförmigen Zylinderräume sind fluidisch offen zueinander. Zieht nun der Elektromotor den zweiten Hydraulikkolben zurück, so verdrängt dieser Druckmittel aus dem zweiten ringförmigen Zylinderraum in den ersten ringförmigen Zylinderraum, so daß der erste Hydraulikkolben verschoben wird.

Prinzipiell betrachtet findet nach dem Ende der Stellbewegung zumindest an der Schließeinheit keine Bewegung und damit keine weitere Verkleinerung des ringförmigen Zylinderraums am ersten Hydraulikkolben statt. Unter Berücksichtigung der Verspannung der Maschinenteile muß man jedoch davon ausgehen, daß sich das Volumen des ersten ringförmigen Zylinderraums noch verkleinert. Deshalb ist es nicht nur bei der Einspritzeinheit oder der Auswerfereinheit, sondern auch bei der Schließeinheit vorteilhaft, wenn wie in Patentanspruch 6 angegeben, auch der dritte Hydraulikkolben ein Differenzkolben mit einem der dritten Wirkfläche abgelegenen dritten ringförmigen Zylinderraum ist, der zu den anderen ringförmigen Zylinderräumen fluidisch offen ist.

Neben Kunststoffspritzgießmaschinen, bei denen zum Schließen der Form dem kolbenstangenabseitigen Zylinderraum eines Schließzylinders Druckmittel zugeführt wird, gibt es auch Maschinen, bei denen die bewegliche Formaufspannplatte von einem oder mehreren Schließzylindem an die ortsfeste Formaufspannplatte herangezogen wird. Die Kolbenstangen werden dann beim Schließen und Zuhalten der Form auf Zug beansprucht. Druckmittel wird den kolbenstangenseitigen Zylinderräumen der Schließzylinder zugeführt. Gemäß Patentanspruch 7 ist bei Maschinen dieser Art nun auch an der zweiten Kolben-Zylinder-Einheit und an der dritten Kolben-Zylinder-Einheit die Wirkrichtung der Hydraulikkolben umgekehrt. Beim Schließen der Form wird Druckmittel aus den kolbenstangenseitigen Zylinderräumen dieser Kolben-Zylinder-Einheiten verdrängt.

An Kunststoffspritzgießmaschinen wird nicht nur die bewegliche Formaufspannplatte zum Schließen der Form hydraulisch verfahren, sondern auch eine Reihe von sogenannten Nebenbewegungen von Hydrozylindern oder, allgemein ausgedrückt, von Hydromotoren durchgeführt. So sind Auswerfer oder Kernzüge zu betätigen oder es ist die Einspritzdüse an die Form heran- und nach dem Einspritzen wieder wegzubewegen. Gemäß Patentanspruch 8 wird nun zugleich mit dem zweiten Hydraulikkolben ein Verdrängerelement bewegt, mit dem Druckfluid aus einem Niederdruckvorratsbehälter in einen Verdrängerraum ansaugbar und aus dem Verdrängerraum in einen Hochdruckhydrospeicher förderbar ist, aus dem die Hydromotoren der Nebenbewegungen mit Druckmittel versorgbar sind. Das Verdrängerelement bildet mit dem zugehörigen ortsfesten Gegenstück eine Art Plungerpumpe. Eine solche Antriebsvorrichtung für eine Kunststoffspritzgießmaschine ist nahezu geräuschlos, da eine rotierende Hydropumpe mit Umsteuervorgängen fehlt. Es ist ein Betrieb mit Wasser möglich, weil kein Hydropumpe vorhanden ist, die ein Druckmittel mit guten Schmiereigenschaften verlangt. Außerdem kann der mechanische Aufbau einer Kunststoffspritzgießmaschine mit einer solchen Antriebsvorrichtung identisch mit dem einer hydraulischen Maschine sein.

Um den dritten Hydraulikkolben mit dem und unabhängig von dem zweiten Hydraulikkolben relativ zu den Zylindergehäusen verfahren zu können, ist es denkbar, zwischen dem Ausgangselement des elektromotorischen Antriebs und jedem Hydraulikkolben jeweils eine Koppelungseinrichtung vorzusehen, von denen eine zum Verschieben des zweiten Hydraulikkolbens und eine zum Verschieben des dritten Hydraulikkolbens wirksam gemacht wird. Bevorzugt wird jedoch gemäß Patentanspruch 10 eine Koppelungseinrichtung verwendet, die zwischen einem Teil der zweiten Kolben-Zylinder-Einheit und dem funktionsmäßig gleichen Teil der dritten Kolben-Zylinder-Einheit angeordnet ist und in deren einem Zustand beide Hydraulikkolben beider Kolben-Zylinder-Einheiten relativ zu den Zylindergehäusen bewegbar sind und in deren anderem Zustand nur der Hydraulikkolben der einen Kolben-Zylinder-Einheit relativ zum Zylindergehäuse bewegbar ist. Insbesondere sind durch die Koppelungseinrichtung der zweite Hydraulikkolben und der dritte Hydraulikkolben während der Stellbewegung des bewegbaren Glieds lagefest miteinander gekoppelt sind und für die Ausübung der hohen Kraft voneinander lösbar. Somit wird während der Stellbewegung nicht nur der zweite Hydraulikkolben, sondern auch der dritte Hydraulikkolben verschoben. Dadurch wird zwar nicht die vom Ausgangselement des elektromotorischen Antriebs, jedoch die vom dritten Hydraulikkolben zurückzulegende Gesamtstrecke länger als bei einer Ausbildung, nach der während der Stellbewegung nur der zweite Hydraulikkolben verschoben wird. Es ist jedoch nur eine Kopplungseinrichtung nötig, die zudem gemäß Patentanspruch 12 sehr einfach aufgebaut sein kann und eine Feder umfaßt, die zwischen dem zweiten Hydraulikkolben und dem dritten Hydraulikkolben eingespannt ist. Diese Feder drückt die beiden Hydraulikkolben aneinander und ist dann so stark vorgespannt, daß sie, ohne weiter gespannt zu werden, die für die Stellbewegung notwendige Kraft vom dritten Hydraulikkolben auf den zweiten Hydraulikkolben übertragen kann.

Allerdings muß bei einer Koppelungseinrichtung mit Feder beim Aufbau der Zuhaltekraft auch die Federkraft überwunden werden. Die Belastung des Elektromotors und einer nachfolgenden Mechanik kann geringer gehalten werden, wenn die Koppelungseinrichtung gemäß Patentanspruch 13 eine schaltbare Magnetkupplung ist.

Wenn bei einer Ausbildung des zweiten und des dritten Hydraulikkolbens als Differenzkolben im Mittel der höhere Druck in den kolbenstangenseitigen Zylinderräumen auftritt, wird eine innere Leckage in die kolbenstangenabseitigen Zylinderräume erfolgen. Dadurch werden der zweite und der dritte Hydraulikkolben während des Betriebs im Sinne einer allmählichen Verkleinerung der kolbenstangenseitigen Zylinderräume driften. Um diese Drift wieder ausgleichen zu können, ist gemäß Patentanspruch 14 eine Ventilanordnung vorgesehen, über die die beiden Zylinderräume zu den beiden Seiten des zweiten Hydraulikkolbens miteinander und die beiden Zylinderräume zu beiden Seiten des dritten Hydraulikkolbens miteinander fluidisch verbindbar sind. Je nach der Größe der Leckage kann man nun die Maschine vor Inbetriebnahme zum Beispiel einmal am Tag oder einmal in der Woche einstellen. Dazu wird die Schließeinheit vollständig bis auf einen mechanischen Anschlag geöffnet. Anschließend wird die Ventilanordnung in den Zustand gebracht, in dem die Zylinderräume zu beiden Seiten des zweiten und des dritten Hydraulikkolbens miteinander verbunden sind. Dann können diese Hydraulikkolben in die der vollständig geöffneten Schließeinheit entsprechende Position gebracht werden. Dann wird die Ventilanordnung wieder in ihre Sperrstellung geschaltet. Als Ventilanordnung genügt gemäß Patentanspruch 15 ein einziges einfaches 2/2-Wegeventil, wenn über dieses unmittelbar die beiden Zylinderräume zu den beiden Seiten des ersten Hydraulikkolben fluidisch miteinander verbindbar sind.

Um eine gleichbleibende Qualität der Spritzgußteile zu gewährleisten; laufen heute die verschiedenen Bewegungsvorgänge an der Einspritzeinheit einer Kunststoffspritzgießmaschine meist nach vorgegebenen Geschwindigkeitsprofilen ab. Als elektrische Antriebsquellen werden deshalb überwiegend durch Frequenzumrichter gesteuerte Elektromotoren verwendet. Frequenzumrichter sind heutzutage noch relative teuer. Gemäß Patentanspruch 16 wird deshalb ein einziger Elektromotor verwendet, um sowohl ein bewegbares Glied der Schließeinheit als auch ein bewegbares Glied der Einspritzeinheit einer Kunststoffspritzgießmaschine zu verfahren. Dazu ist in der jeweiligen Kraftkette eine Kupplung vorgesehen. Es wird jetzt nur ein Elektromotor und nur ein Frequenzumrichter benötigt, so daß eine Kunststoffspritzgießmaschine mit einer solchen Antriebsvorrichtung besonders kostengünstig herstellbar ist. Vorzugsweise sind die Kupplungen Schaltkupplungen.

Eine weitere Vereinfachung der Antriebsvorrichtung läßt sich erreichen, wenn gemäß Patentanspruch 17 von dem Elektromotor die Schnecke über eine dritte Kupplung drehend antreibbar ist. Es werden dann nur ein Elektromotor und nur ein Frequenzumrichter für drei verschiedene Bewegungen an der Kunststoffspritzgießmaschine benötigt, so daß sich die Maschine besonders kostengünstig herstellen.

Ein beim Plastifizieren gewünschter Staudruck ist, wenn der Elektromotor bei gelöster zweiter und geschlossener dritter Kupplung die Schnecke drehend antreibt, gemäß Patentanspruch 18 vorteilhafterweise durch Ansteuerung eines hydraulischen Staudruckzylinders einstellbar, wobei der Staudruckzylinder einer rückwärtigen Bewegung der Schnecke einen zum Aufbau des Staudrucks notwendigen Widerstand entgegensetzen.

Bei einer Ausbildung gemäß Patentanspruch 19 wird der vom Elektromotor angetriebene Gewindetrieb von großen Kräften entlastet. Es ist die axiale Bewegung mit einem relativ kleinen Elektromotor genau steuerbar.

Mehrere Ausführungsbeispiele einer erfindungsgemäßen Antriebsvorrichtung sind in den Zeichnungen dargestellt. Anhand dieser Zeichnungen wird die Erfindung nun näher erläutert.

Es zeigen
- Figur 1: das erste Ausführungsbeispiel, bei dem der erste Hydraulikkolben, der zweite Hydraulikkolben und der dritte Hydraulikkolben als Differenzkolben ausgebildet sind und zum Schließen und Zuhalten einer Form die kolbenstangenabseitigen Zylinderräume mit Druck beaufschlagt sind und bei dem der elektromotorische Antrieb, von dem auch die Schnecke zum Einspritzen von Kunststoff axial verfahrbar ist, seitlich von Schließeinheit und Einspritzeinheit auf einer zweiten Achse angeordnet ist,
- Figur 2: ein zweites Ausführungsbeispiel, bei dem der elektromotorische Antrieb auf der Achse von Schließeinheit und Einspritzeinheit angeordnet ist,
- Figur 3: ein drittes Ausführungsbeispiel, das sich von demjenigen nach Figur 1 dadurch unterscheidet, daß der Elektromotor die Schnecke sowohl drehend antreibt als auch axial verfährt,
- Figur 4: ein viertes Ausführungsbeispiel, das sich von demjenigen nach Figur 3 dadurch unterscheidet, daß der Elektromotor die Schnecke und den zweiten und den dritten Hydraulikkolben axial nicht jeweils über einen Gewindetrieb, sondern über einen Zahnstangentrieb verfährt.
- Figur 5: ein fünftes Ausführungsbeispiel, bei dem wie bei den vorhergehenden Ausführungsbeispielen der erste Hydraulikkolben, der zweite Hydraulikkolben und der dritte Hydraulikkolben als Differenzkolben ausgebildet sind, zum Schließen und Zuhalten einer Form jedoch die kolbenstangenseitigen Zylinderräume mit Druck beaufschlagt sind, und bei dem zusätzlich eine Plungerpumpe zur Druckmittelversorgung von sonstigen hydraulischen Verbrauchern vorhanden ist,
- Figur 6: ein sechstes Ausführungsbeispiel, das sich von demjenigen nach Figur 5 dadurch unterscheidet, daß ähnlich wie bei dem Ausführungsbeispiel nach Figur 1 zum Plastifizieren ein zweiter Elektromotor verwendet wird,
- Figur 7: ein siebtes Ausführungsbeispiel, das hinsichtlich der Wirkrichtung des zweiten Hydraulikkolbens und des dritten Hydraulikkolbens dem Ausführungsbeispiel nach Figur 1 entspricht und das zusätzlich eine Plungerpumpe aufweist, und
- Figur 8: ein achtes Ausführungsbeispiel, bei dem gegenüber den Ausführungsbeispielen nach den Figuren 5 bis 7 eine kinematische Umkehrung stattgefunden hat.

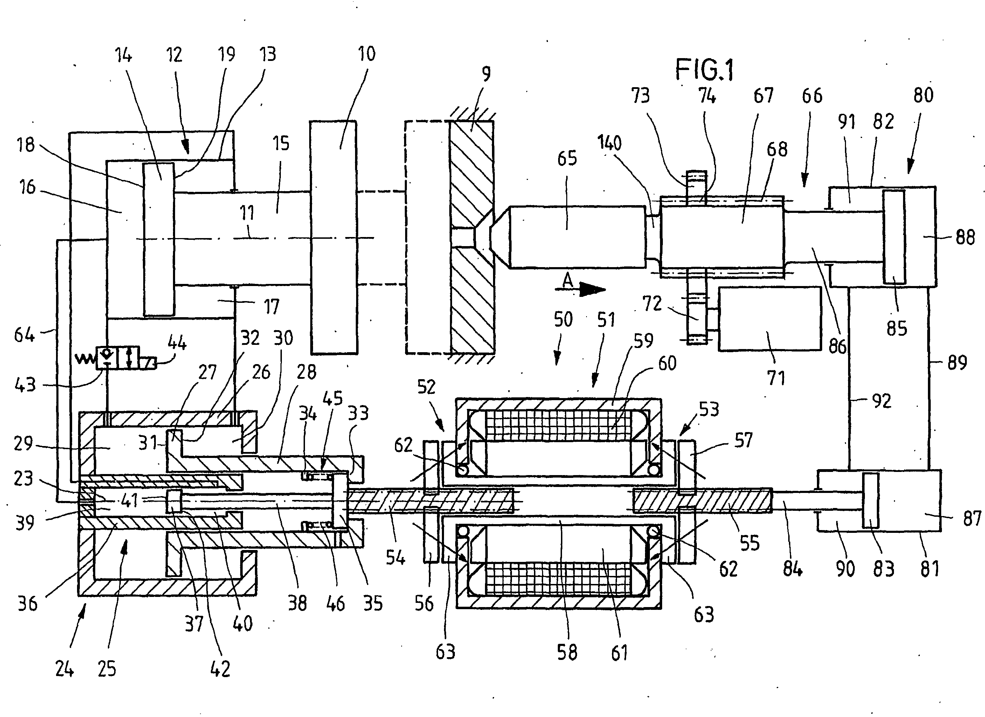

Gemäß den Figuren 1 bis 4 besitzt eine Kunststoffspritzgießmaschine eine bewegliche Formaufspannplatte 10, die in allgemein bekannter und deshalb nicht näher dargestellter Weise an einem Maschinengestell geradlinig gegenüber einer ortsfesten Formaufspannplatte 9 verfahrbar geführt ist. Mit ihrer Achse 11 in Verfahrrichtung ausgerichtet ist eine erste Kolben-Zylinder-Einheit 12, die ein gestellfestes, erstes Zylindergehäuse 13 und einen ersten Hydraulikkolben 14 mit einer aus dem Zylindergehäuse herausragenden Kolbenstange 15 aufweist, an der die Formaufspannplatte 10 befestigt ist. Der Hydraulikkolben 14 ist also ein Differenzkolben, der das Innere des Zylindergehäuses 13 in einen kolbenstangenabseitigen, im Querschnitt kreiszylindrischen Zylinderraum 16 und einen auf der Seite der Kolbenstange befindlichen (kolbenstangenseitigen), ringförmigen Zylinderraum 17 aufteilt. An den Zylinderraum 16 grenzt der Hydraulikkolben 14 mit einer kreisscheibenförmigen Wirkfläche 18 und an den Zylinderraum mit einer ringförmigen Wirkfläche 19 an. Beide Zylinderräume sind mit Druckmittel gefüllt. Zum Verfahren der Formaufspannplatte 10 in Richtung Schließen der Form wird ein flüssiges Druckmittel, wie zum Beispiel Mineralöl oder Silikonöl oder Wasser, dem Zylinderraum 16 und zum Verfahren der Formaufspannplatte 10 in Richtung Öffnen dem Zylinderraum 17 zugeführt und aus dem jeweils anderen Zylinderraum verdrängt.

Die Zufuhr und die Verdrängung von Druckmittel erfolgt von und zu zwei weiteren Kolben-Zylinder-Einheiten, nämlich einer zweiten Kolben-Zylinder-Einheit 24 und einer dritten Kolben-Zylinder-Einheit 25. Letztere weist ein gestellfestes, drittes Zylindergehäuse 36 auf, dessen Innendurchmesser wesentlich kleiner, zum Beispiel fünfmal kleiner als der Innendurchmesser des Zylindergehäuses 13 ist. In dem Zylindergehäuse 36 ist ein als Differenzkolben ausgebildeter Hydraulikkolben 37 axial beweglich, mit dem eine aus dem Zylindergehäuse 36 abgedichtet herausragende Kolbenstange 38 verbunden ist und der das Innere des Zylindergehäuses 36 abgedichtet in einen im Querschnitt kreiszylindrischen Zylinderraum 39 und einen auf der Seite der Kolbenstange 38 befindlichen ringförmigen Zylinderraum 40 aufteilt. An den Zylinderraum 39 grenzt der Hydraulikkolben 37 mit einer kreisscheibenförmigen Wirkfläche 41 und an den Zylinderraum 40 mit einer ringförmigen Wirkfläche 42 an. Entsprechend dem Unterschied in den Innendurchmessern der Zylindergehäuse 13 und 36 ist die Wirkfläche 41 des Hydraulikkolbens 37 wesentlich kleiner als die Wirkfläche 18 des Hydraulikkolbens 14. Ebenso ist die Wirkfläche 42 wesentlich kleiner als die Wirkfläche 19.

Die Kolben-Zylinder-Einheit 24 ist ringzylindrisch ausgebildet und umgibt die Kolben-Zylinder-Einheit 25. Sie besitzt ein gestellfestes, zweites Zylindergehäuse 26, das eine äußere Zylinderwand und eine innere Zylinderwand umfaßt. Letztere ist zugleich das Zylindergehäuse 36 der Kolben-Zylinder-Einheit 25. In dem Zylindergehäuse 26 ist ein als Differenzkolben ausgebildeter, ringförmiger Hydraulikkolben 27 axial beweglich, mit dem eine aus dem Zylindergehäuse 26 in dieselbe Richtung wie die Kolbenstange 38 des Hydraulikkolbens 37 innen und außen abgedichtet herausragende Kolbenstange 28 verbunden ist. So wie der Spalt zwischen der Außenseite der Kolbenstange 28 und dem Zylindergehäuse 26 abgedichtet ist, ist dies also auch der Spalt zwischen der Innenseite des Hydraulikkolben 27 bzw. der Kolbenstange 28 und dem Zylindergehäuse 36. Der Hydraulikkolben 27 teilt das Innere des Zylindergehäuses 26 abgedichtet in einen kolbenstangenabseitigen, größeren ringförmigen Zylinderraum 29 und einen kolbenstangenseitigen, kleineren ringförmigen Zylinderraum 30 auf. An den Zylinderraum 29 grenzt der Hydraulikkolben 27 mit einer großen ringförmigen Wirkfläche 31 und an den Zylinderraum 30 mit einer kleineren ringförmigen Wirkfläche 32 an. Die Wirkfläche 31 des Hydraulikkolbens 27 ist etwa so groß wie die Wirkfläche 18 des Hydraulikkolbens 14. Ebenso ist die Wirkfläche 32 etwa so groß wie die Wirkfläche 19. Die Unterschiede in den Wirkflächen können jedoch auch stärker sein. Die Kolbenstange 28 ist hohl, umschließt die Kolbenstange 38 und hat an ihrem freien Ende einen nach innen ragenden Bund 33.

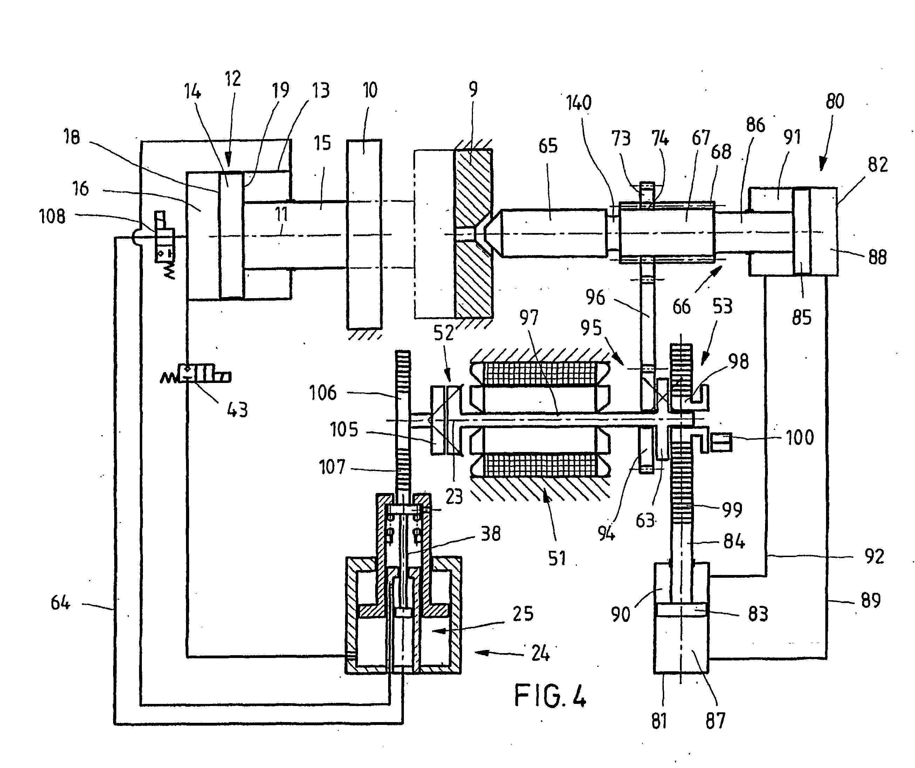

Die Zylinderräume 16 und 39 der Kolben-Zylinder-Einheiten 12 und 25 sind außer beim Ausführungsbeispiel nach Figur 4 fluidisch offen zueinander, so daß zwischen ihnen in jeder Betriebsphase ungehindert ein Austausch von Druckflüssigkeit stattfinden kann. Auch zwischen den Zylinderräumen 16 und 29 der Kolben-Zylinder-Einheiten 12 und 24 kann Druckflüssigkeit hin und her fließen. Allerdings ist dieser Fluß mithilfe eines 2-Wege-Sitzventils 43 steuerbar, das in einer Ruhestellung die Verbindung zwischen den beiden Zylinderräumen 16 und 29 leckagefrei verschließt und durch einen Elektromagneten 44 in eine Arbeitsstellung geschaltet werden kann, in der die Verbindung offen ist. Der im Zylinderraum 16 herrschende Druck wirkt dabei schließend auf das Ventilglied des Ventils 43. Fluidisch offen miteinander verbunden sind wiederum die Zylinderräume 17, 30 und 40 der Kolben-Zylinder-Einheiten 12, 24 und 25.

Die beiden Kolbenstangen 28 und 38 sind über eine Koppelungseinrichtung 45 mechanisch miteinander verbunden. Diese Koppelungseinrichtung umfaßt eine Druckfeder 46, die zwischen einem von dem Innenbund 33 beabstandeten weiteren Innenbund 34 der Kolbenstange 28 und einer an der Kolbenstange 38 befestigten und sich zwischen den beiden Innenbunden 33 und 34 der Kolbenstange 28 befindlichen Scheibe 35 eingespannt ist. Somit kann von der kolbenstange 38 die Kolbenstange 28 in die eine Richtung durch Anlage der Scheibe 35 am Bund 33 formschlüssig mitgenommen werden. In die andere Richtung ist eine Mitnahme der Kolbenstange 28 durch die Kolbenstange 38 über die Druckfeder 46 bis zu einer Grenzkraft möglich, die durch die Vorspannung der Druckfeder bestimmt ist. Es ist eine Druckfeder 46 oder ein Federpaket verwendet, dessen Vorspannung sich nur geringfügig ändert, wenn die Scheibe 35 vom Bund 33 abhebt und sich dem Bund 34 nähert.

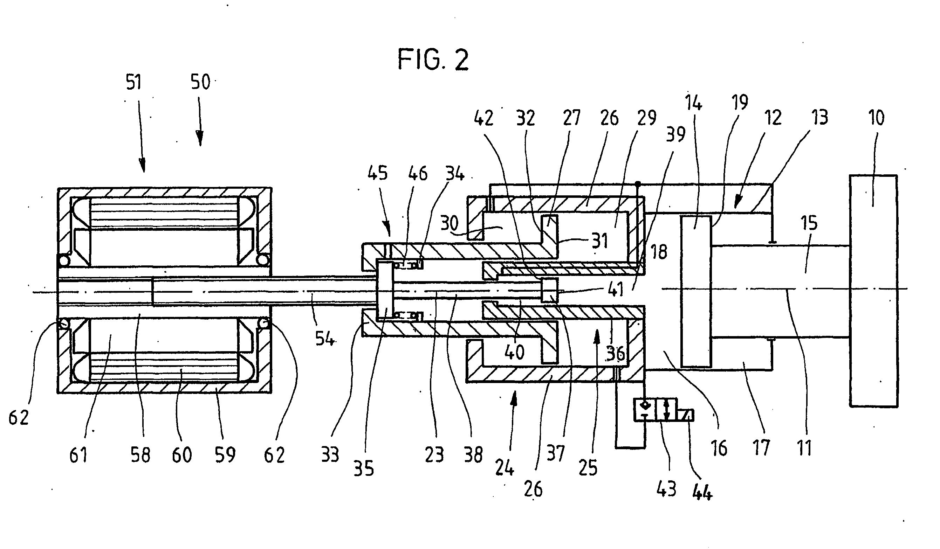

Die bisher beschriebenen hydraulischen Komponenten, die bei allen Ausführungsbeispielen nach den Figuren 1 bis 4 in weitgehend gleicher Weise vorhanden sind, kann man als hydraulisches Getriebe zwischen der Formaufspannplatte 10 und einem elektromotorischen Antrieb 50 betrachten. Die Ausführungsbeispiele nach den Figuren 1 und 2 unterscheiden sich in erster Linie in der Anordnung der drei Kolben-Zylinder-Einheiten. Bei der Ausführung nach Figur 1 hat die Achse 23 der aus den beiden ineinander integrierten Kolben-Zylinder-Einheiten 24 und 25 bestehenden Baueinheit einen Abstand von der Achse 11 der Kolben-Zylinder-Einheit 12. Beide Achsen verlaufen parallel zueinander. In Richtung der Achsen befindet sich die Baueinheit aus den beiden Kolben-Zylinder-Einheiten 24 und 25 etwa auf Höhe der Kolben-Zylinder-Einheit 12. Die beiden Kolbenstangen 28 und 38 weisen dabei in dieselbe Richtung wie die Kolbenstange 15. Dementsprechend befindet sich der elektromotorische Antrieb, in Richtung der Achsen 11 und 23 betrachtet, im Bereich der Formaufspannplatten und des Plastifizierzylinders 65 der Kunststoffspritzgießmaschine.

Bei dem Ausführungsbeispiel nach Figur 2 dagegen liegt die Baueinheit aus den beiden Kolben-Zylinder-Einheiten 24 und 25 in der Achse 11 der Kolben-Zylinder-Einheit 12 und ist unmittelbar an diese Einheit 12 angebaut. Dabei können die Einheiten gemeinsame Gehäuseteile haben. Der Zylinderraum 39 der Kolben-Zylinder-Einheit 25 öffnet sich bei dem Ausführungsbeispiel nach Figur 2 auf seinem ganzen Querschnitt unmittelbar zum Zylinderraum 16. Dementsprechend kann hier der Hydraulikkolben 37 auch in den Zylinderraum 16 eintauchen. Seine Wirkfläche 41 könnte sich sogar immer in dem Zylinderraum 16 befinden, wobei durch eine hohle Ausbildung des Hydraulikkolbens 14 und seiner Kolbenstange 15 trotzdem ein großer Weg möglich wäre. Beim Ausführungsbeispiel nach Figur 1 dagegen ist der Zylinderraum 39 durch einen Boden verschlossen. Lediglich eine Anschlußöffnung ist vorhanden, von der eine Leitung 64 zum Zylinderraum 16 führt.

Der elektromotorische Antrieb 50 des Ausführungsbeispiels nach Figur 1 umfaßt einen Elektromotor 51, zwei schaltbare Kupplungen 52 und 53 und zwei Gewindetriebe, die jeweils eine Gewindespindel 54 bzw. 55 und eine Spindelmutter 56 bzw. 57 aufweisen.

Der Elektromotor 51 liegt mit seiner Achse in der Achse 23, fluchtet also mit den beiden Kolben-Zylinder-Einheiten 24 und 25, und befindet sich vor der Seite dieser beiden Einheiten, von der die Kolbenstangen 28 und 38 abstehen. Er ist als Hohlwellenmotor mit einer Hohlwelle 58 ausgebildet, die die beiden Gewindespindein 54 und 55 frei beweglich aufnimmt, wobei die Gewindespindel 54 in die eine Richtung und die andere Gewindespindel 55 in die entgegengesetzte Richtung aus der Hohlwelle herausragt. Die Gewindespindel 54 ist an der Kolbenstange 38 des Hydraulikkolbens 37 bzw. an der Scheibe 35 befestigt. Ein Gehäuse 59 des Elektromotors 51, das einen Stator mit Wicklungen 60 aufnimmt, ist gestellfest angeordnet. Die Hohlwelle 58, die den Rotor 61 trägt, ist über zwei Wälzlager 62, die sowohl Radial- als auch Axialkräfte aufnehmen können, drehbar im Gehäuse 59 gelagert.

Die nur schematisch angedeuteten Kupplungen 52 und 53 sind identisch zueinander aufgebaut und haben als Eingangselement eine Scheibe 63, die verdrehsicher auf der Hohlwelle 58 befestigt ist, und als Ausgangselement die Spindelmutter 56 (Kupplung 52) oder die Spindelmutter 57 (Kupplung 53). Die Kupplungen können zum Beispiel jeweils durch einen Elektromagneten betätigbar sein. Wenn die Kupplung 52 geschlossen ist, kann die Spindelmutter 56 vom Elektromotor 51 in die eine oder in die andere Richtung gedreht werden, so daß die gegen Verdrehen gesicherte Gewindespindel 54 geradlinig vor oder zurück bewegt wird. Bei geschlosssener Kupplung 53 ist entsprechend ein geradliniges Verfahren der ebenfalls gegen Verdrehen gesicherten Gewindespindel 55 möglich.

Bei dem Ausführungsbeispiel nach Figur 2 umfaßt der elektromotorische Antrieb 50, dessen Achse mit den Achsen 11 und 23 zusammenfällt, einen Elektromotor 51, der wiederum als Hohlwellenmotor mit einer Hohlwelle 58 ausgebildet ist, die aber anders als in Figur 1 nur eine Gewindespindel, nämlich die mit der Kolbenstange 38 verbundene Gewindespindel 54 aufnimmt. Die Hohlwelle 58 ist innen mit einem Trapezgewinde oder einem Kugelrollgewinde versehen. Die gegen Verdrehen gesicherte Gewindespindel 54 trägt ein entsprechendes Gewinde außen und ist über dieses mit der Hohlwelle 58 gekoppelt. Ein Gehäuse 59 des Elektromotors 51, das einen Stator mit Wicklungen 60 aufnimmt, ist gestellfest angeordnet. Die Hohlwelle 58, die den Rotor 61 trägt, ist über zwei Wälzlager 62, die sowohl Radial- als auch Axialkräfte aufnehmen können, drehbar im Gehäuse 59 gelagert.

In den Figuren 1 und 2 ist die Antriebsvorrichtung für die Formaufspannplatte in einem Zustand gezeigt, in dem die Form einer Kunststoffspritzgießmaschine geöffnet ist. Soll nun die Form geschlossen werden, so wird der Elektromotor 51 so gesteuert, daß sich seine Hohlwelle 58 in eine solche Richtung dreht, daß die Gewindespindel 54 weiter aus der Hohlwelle herausfährt. Dabei ist bei dem Ausführungsbeispiel nach Figur 1 die Kupplung 52 geschlossen. Die Gewindespindel 54 verschiebt die Kolbenstange 38 mitsamt Hydraulikkolben 37 und über die Druckfeder 46 auch den Hydraulikkolben 27. Das Ventil 43 ist offen. Aus den Zylinderräumen 29 und 39 wird Druckflüssigkeit in den Zylinderraum 16 verdrängt, so daß die Kolbenstange 15 des Hydraulikkolbens 14 ausfährt. Der Widerstand, den die Formaufspannplatte 10 einer Bewegung entgegensetzt, ist dabei so gering, daß die Druckfeder 46 nicht weiter zusammengedrückt wird und die Scheibe 35 der Kolbenstange 38 am Bund 33 der Kolbenstange 28 hält. Die Bewegung der Formaufspannplatte ist schnell, da wegen der großen Wirkfläche 31 des Hydraulikkolbens 27 viel Druckflüssigkeit aus dem Zylinderraum 29 verdrängt wird. Die beim Ausfahren der Kolbenstange 15 des Hydraulikkolbens 14 aus dem Zylinderraum 17 verdrängte Druckflüssigkeit wird von den Zylinderräumen 30 und 40 ohne Druckerhöhung aufgenommen.

Wenn die Form geschlossen ist und die Formaufspannplatte 10 die in Figur 1 mit gestrichelten Linien gezeichnete Position einnimmt, schließt das Ventil 43, so daß die sich im Zylinderraum 29 befindliche Drückftussigkeit eingesperrt ist. Der Druck in diesem Zylinderraum steigt deshalb auf das Druckäquivalent zur Vorspannung der Druckfeder 46 an und der Hydraulikkolben 27 kann nicht mehr weiterbewegt werden. Im folgenden wird nur noch der Hydraulikkolben 37 mit der kleinen Wirkfläche 41 verschoben und dadurch ein hoher Druck im Zylinderraum 16 aufgebaut, der an der großen Wirkfläche 18 des Hydraulikkolbens 14 eine hohe Schließkraft für die Form erzeugt. Die Kolben-Zylinder-Einheiten 12 und 25 bilden dabei einen hydraulischen Kraftübersetzer, der es ermöglicht, die hohe Schließkraft mit einem relativ kleinen Elektromotor und mit einer geringen Belastung des Gewindetriebs zu erhalten.

Zum Öffnen der Form wird der Elektromotor 51 in umgekehrter Drehrichtung angetrieben, so daß die Gewindespindel zurück in die Hohlwelle 54 hineinwandert. Dabei wird zuerst nur der Hydraulikkolben 37 mitgenommen und dabei die Druckflüssigkeit im Zylinderraum 16 dekomprimiert. Schließlich fahren beide Hydraulikkolben 27 und 37 zurück und verdrängen Druckflüssigkeit aus den Zylinderräumen 30 und 40 in den Zylinderraum 17, so daß der Hydraulikkolben, 14 die Kolbenstange 15 und mit dieser die bewegliche Formaufspannplatte 10 zurückzieht.

Bei dem Ausführungsbeispiel nach Figur 2 dient der Elektromotor 51 nur zum Antrieb eines bewegbaren Glieds der Schließeinheit einer Kunststoffspritzgießmaschine. Bei dem Ausführungsbeispiel nach Figur 1 dagegen wird der Elektromotor 51 darüber hinaus auch zum Antrieb eines bewegbaren Glieds einer in Figur 1 dargestellten Einspritzeinheit verwendet. Dazu ist die zweite Gewindespindel 55 vorhanden.

Zu der Einspritzeinheit gehört eine sich innerhalb eines Plastifizierzylinders 65 befindliche Schnecke 140, die Bestandteil einer drehend antreibbaren und axial verschiebbaren körperlichen Einspritzachse 66 ist. Diese umfaßt außer der Schnecke 140 eine Keilwelle 67 mit Keilnuten 68. Seitlich der Keilwelle ist ein kleiner elektrischer Normmotor 71 mit Drehzahlregelung angeordnet, der auf seiner Welle ein Ritzel 72 trägt, das mit einem auf der Keilwelle 14 sitzenden im Durchmesser größeren Zahnrad 73 kämmt. Dieses greift mit Keilen 74 in die Keilnuten 68 der Keilwelle 67 ein. Somit ist die Keilwelle 67 einerseits verdrehsicher mit dem Zahnrad 73 gekoppelt, kann aber andererseits gegen das axial ortsfest gehaltene Zahnrad axial verschoben werden. Von dem Elektromotor 71 kann also die Schnecke unabhängig von ihrer axialen Position drehend angetrieben werden.

Eine axiale Verschiebung der Einspritzachse 66 wird durch den elektromotorischen Antrieb 50 bewerkstelligt. Zwischen dessen Gewindespindel 55 und der Keilwelle 67 ist ein hydraulischer Kraftübersetzer 80 eingefügt, der aus zwei voneinander beabstandeten Kolben-Zylinder-Einheiten 81 und 82 besteht, von denen die Einheit 81 in der Achse 23 und die Einheit 82 in der Achse 11 liegt Von dem hydraulischen Kraftübersetzer 80 wird somit der Abstand zwischen den beiden genannten Achsen überbrückt. Die Einheit 81 hat einen als Differenzkolben 83 . ausgebildeten und über eine Kolbenstange 84 an der Gewindespindel 55 befestigten Hydraulikkolben und die Einheit 82 einen als Differenzkolben 85 ausgebildeten Hydraulikkolben. Dessen Kolbenstange 86 ist an der Keilwelle 67 befestigt. Die kreiszylinderförmigen Zylinderräume 87 und 88 der beiden Einheiten 81 und 82 sind über eine Leitung 89 und die ringförmigen Zylinderräume 90 und 91 über eine Leitung 92 fluidisch miteinander verbunden. Die dem Zylinderraum 87 zugekehrte Wirkfläche des Hydraulikkolbens 83 ist wesentlich kleiner als die dem Zylinderraum 88 zugekehrte Wirkfläche des Hydraulikkolbens 85.

Im Betrieb wird zum Plastifizieren von Kunststoff die Schnecke 140 über die Keilwelle 67 von dem Elektromotor 71 angetrieben. Dadurch wird Kunststoffmasse in den Raum vor das Ende der Schnecke gefördert Die Schnecke und mit ihr die gesamte Einspritzachse 66 und der Hydraulikkolben 85 des hydraulischen Kraftübersetzers 80 werden durch den sich in dem Raum vor der Schnecke aufbauenden Staudruck rückwärts in Richtung des Pfeiles A belastet. Für den Staudruck ist eine bestimmte Höhe oder ein bestimmter Höhenverlauf gewünscht. Zu diesem Zweck wird der Elektromotor 51 bei geschlossener Kupplung 53 mit einem solchen Strom beaufschlagt, daß über die selbsthemmend miteinander gekoppelten Gewindespindel 55 und Spindelmutter 57 auf den Hydraulikkolben 83 des hydraulischen Kraftübersetzers 80 eine in Richtung des Pfeiles A wirkende Kraft ausgeübt wird. In den Zylinderräumen 87 und 88 steht somit ein durch die vom Elektromotor 51 ausgeübte Kraft und die an den Zylinderraum 87 angrenzende Wirkfläche des Hydraulikkolbens 83 gegebener Druck an, der wiederum an der entsprechenden Wirkfläche des Hydraulikkolbens 85 eine größere den Staudruck bestimmende Kraft erzeugt. Beim Plastifizieren werden die Schnecke 140 und der Hydraulikkolben 85 in Richtung des Pfeiles A und der Hydraulikkolben 83 entgegen der Richtung des Pfeiles A bewegt.

Ist genügend Kunststoff plastifiziert, wird der Elektromotor 71 stillgesetzt. Die Drehrichtung des Elektromotors 51 wird umgekehrt, so daß sich die Gewindespindel 55 und der Hydraulikkolben 83 in Richtung des Pfeiles A nach rechts bewegen. Der Hydraulikkolben 83 verdrängt Druckflüssigkeit aus dem Zylinderraum 87 über die Leitung 89 in den Zylinderraum 88. Dadurch wird der Hydraulikkolben 85 des Kraftübersetzers 80 und mit ihm die Einspritzachse 66 mitsamt der Schnecke entgegen der Richtung des Pfeiles A nach links bewegt. Für diese Bewegung muß vom Kolben 85 eine bestimmte Kraft aufgebracht werden. Die vom Elektromotor 51 aufzubringende Kraft ist um einen Faktor kleiner, der gleich dem Verhältnis der Größe der von Druck beaufschlagten Wirkflächen ist. Der vom Hydraulikkolben 83 zurückgelegte Weg ist um einen Faktor gleich dem reziproken Verhältnis größer als der Weg des Hydraulikkolbens 85.

Während des Plastifizier- und Einspritzvorgangs ist die Kupplung 52 offen. Der Zuhaltedruck für die Form bleibt aufrechterhalten, da der Hydraulikkolben 37 über die selbsthemmend miteinander gekoppelten Gewindespindel 54 und die Spindelmutter 56 axial abgestützt ist.

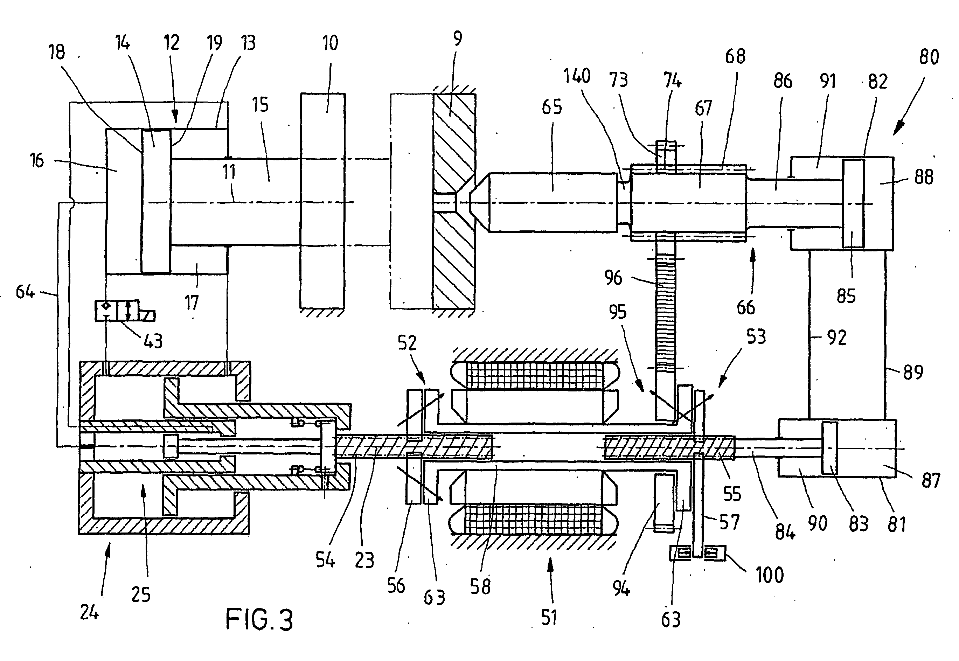

Bei den beiden Ausführungen nach den Figuren 3 und 4 ist wie bei der Ausführung nach Figur 1 die sich innerhalb eines Plastifizierzylinders 65 befindliche Schnecke 140 wiederum Bestandteil einer drehend antreibbaren und axial verschiebbaren Einspritzachse 66, die eine Keilwelle 67 mit Keilnuten 68 umfaßt. Auf der Keilwelle 67 sitzt das Zahnrad 73, das mit Keilen 74 in die Keilnuten 68 der Keilwelle 67 eingreift. Somit ist die Keilwelle 67 einerseits verdrehsicher mit dem Zahnrad 73 gekoppelt, kann aber andererseits gegen das axial ortsfest gehaltene Zahnrad 73 axial verschoben werden. Über das Zahnrad 73 kann also wie bei der Ausführung nach Figur 1 die Schnecke 140 unabhängig von ihrer axialen Position drehend angetrieben werden.

Im Unterschied zum Ausführungsbeispiel nach Figur 1 ist die Schnecke 140 über das Zahnrad 73 nicht von einem separaten Elektromotor, sondern vom Elektromotor 51 drehend antreibbar, von dem sie auch axial verfahrbar ist. Die Lage des Elektromotors 51 seitlich der Einspritzachse 66 und die Ausrichtung der Motorachse 23 sind gleich wie beim Ausführungsbeispiel nach Figur 1.

Der Elektromotor 51 hat bei dem Ausführungsbeispiel nach Figur 3 wie bei dem Ausführungsbeispiel nach Figur 1 eine rotierenden Hohlwelle 58, damit eine Gewindespindel 55, die zusammen mit einer Spindelmutter 57 einen Gewindetrieb bildet, Baulänge sparend eintauchen kann. Die Gewindespindel 55 ist wiederum gegen Verdrehen gesichert. Die Spindelmutter 57 dagegen ist das Ausgangselement einer Schaltkupplung 53 und über diese und die Hohlwelle 58 von dem Elektromotor 51 rotierend antreibbar. Das Eingangselement der Schaltkupplung 53 bildet eine Kupplungsscheibe 63, die nahe an dem Ende der Hohlwelle, an dem die Gewindespindel 55 herausragt, axial verschiebbar, aber drehfest auf der Hohlwelle 58 geführt ist. Die Spindelmutter 57 befindet sich auf der einen Seite der Kupplungsscheibe 63 vor dem Ende der Hohlwelle und greift dort in die Gewindespindel 55 ein. Über die Gewindespindel 55 kann die Schnecke 140 axial bewegt werden.

Auf der anderen Seite der Kupplungsscheibe 63 ist auf der Hohlwelle 55 axial ortsfest, aber drehbar ein Zahnrad 94 gelagert, das das Ausgangselement einer dritten Schaltkupplung 95 ist, die als Eingangselement dieselbe Scheibe 63 wie die Schaltkupplung 53 oder eine zweite Scheibe 63 hat. Das Zahnrad 94 befindet sich, in Richtung der Achsen 23 und 11 gesehen, genau auf Höhe des Zahnrades 73. Die beiden Zahnräder 73 und 94 sind über einen Zahnriemen 96 miteinander gekoppelt. Der Durchmesser des Zahnrades 94 ist größer als derjenige des Zahnrades 73, so daß man eine Drehzahlübersetzung erhält.

Bei dem Ausführungsbeispiel nach Figur 4 besitzt der Elektromotor 51 eine volle Motorwelle 97, über die wie mit der Hohlwelle 58 beim Ausführungsbeispiel nach Figur 3 über Schaltkupplungen 53 und 95 die zwei unterschiedlichen Bewegungen der Schnecke 140 herbeigeführt werden können. Eingangselement der beiden Schaltkupplungen 53 und 95 ist wiederum eine Kupplungsscheibe 63, die nahe am einen Ende der Motorwelle 97 auf dieser axial verschiebbar, aber drehfest geführt ist Das Ausgangselement der Schaltkupplung 95 ist wiederum ein Zahnrad 94, das mit dem Zahnrad 73 über den Zahnriemen 96 gekoppelt ist. Das Ausgangselement der Schaltkupplung 53 ist nun ein weiteres Zahnrad 98, das auf einem Lagerzapfen der Motorwelle 97 drehbar gelagert ist und in eine senkrecht zur Motorwelle 97 verlaufende Zahnstange 99 eingreift, über die sich die Schnekke axial verfahren läßt. Der aus dem Zahnrad 98 und der Zahnstange 99 bestehende Zahnstangentrieb des Ausführungsbeispiel nach Figur 4 und der aus der Spindelmutter 57 und der Gewindespindel 55 bestehende Gewindetrieb des Ausführungsbeispiel nach Figur 3 entsprechen sich.

Zwischen der Gewindespindel 55 bzw. der Zahnstange 99 und der Keilwelle 67 ist auch bei den Ausführungsbeispielen nach den Figuren 3 und 4 ein hydraulischer Kraftübersetzer 80 eingefügt, der wie bei dem Ausführungsbeispiel nach Figur 1 aussieht und der einen als Differenzkolben 83 ausgebildeten und über eine Kolbenstange 84 an der Gewindespindel 55 bzw. an der Zahnstange 99 befestigten Eingangskolben und einen als Differenzkolben 85 ausgebildeten Ausgangskolben aufweist. Auf der einen Seite des Kolbens 83 befindet sich der Zylinderraum 87 und auf der anderen Seite der Zylinderraum 90. Der Kolben 85 grenzt an den Zylinderraum 88, der fluidisch mit dem Zylinderraum 87 verbunden ist, und an den Zylinderraum 91 an, der mit dem Zylinderraum 90 fluidisch verbunden ist. Ein Vergleich der beiden Ausführungsbeispiele nach den Figuren 3 und 4 zeigt, daß die hydrostatische Kraftübertragung mit dem Kraftübersetzer 80 eine hohe Flexibilität in der Anordnung einzelner Bauteile mit sich bringt, da sich die beiden Komponenten 81 und 82 des Kraftübersetzers grundsätzlich beliebig zueinander anordnen lassen.

Hinsichtlich des Antriebs der beweglichen Formaufspannplatte 10 ist das Ausführungsbeispiel nach Figur 3 völlig identisch zu demjenigen nach Figur 1, so daß hier auf die entsprechenden Beschreibungsteile verwiesen werden kann.

Beim Ausführungsbeispiel nach Figur 4 dagegen ist über eine Ausgangsscheibe 105 der ersten Schaltkupplung 52 ein Ritzel 106 antreibbar, das mit einer Zahnstange 107 kämmt, die fest mit der Kolbenstange 38 des Hydraulikkolbens 37 verbunden ist Die Zahnstange 107 verläuft in dieselbe Richtung wie die Zahnstange 99. Dementsprechend sind auch die Kolben-Zylinder-Einheiten 24 und 25 des Ausführungsbeispiel nach Figur 4 um neunzig Grad gegenüber dem Ausführungsbeispiel nach Figur 1 geschwenkt angeordnet. Auch hier wird die durch die Verwendung einer hydrostatischen Kraftübertragungsvorrichtung gegebene Flexibilität hinsichtlich der Anordnung der einzelnen Komponenten deutlich.

Im Unterschied zum Ausführungsbeispiel nach Figur 1 befindet sich bei demjenigen nach Figur 4 auch in der Leitung 64 ein 2/2-Wege-Schaltventil 108. Mit diesem Ventil kann die Druckflüssigkeit in dem Zylinderraum 16 eingesperrt werden, wenn der hohe Zuhaltedruck aufgebaut ist und die Kupplung 52 geöffnet wird. Eine Zuhaltung durch den nicht selbsthemmenden Zahnstangentrieb 105, 107 wäre ohne eine zusätzliche mechanische Blockiervorrichtung nicht möglich. Natürlich kann auch bei den Ausführungsbeispielen nach den Figuren 1 und 3 ein Ventil 108 verwendet werden. Der Gewindetrieb 54, 56 braucht dann nicht selbsthemmend zu sein und wird nicht über längere Zeit durch vom hohen Zuhaltedruck auf den Kolben 37 ausgeübte Kraft belastet.

Im übrigen hat eine hydraulischer Kraftübertragungsvorrichtung der bezeichneten Art insbesondere folgende Vorteile:

Sie besitzt einen sehr guten Wirkungsgrad.

Sie ist gegenüber einer hydraulischen Kraftübertragung mit Hydropumpe geräuscharm, da keine Umsteuervorgänge stattfinden.

Der Verschleiß ist gering, da im Vergleich mit einer Hydropumpe nur geringe Relativgeschwindigkeiten auftreten.

Es ist leicht ein Betrieb mit Wasser als Druckflüssigkeit möglich, weil keine Hydropumpe verwendet wird, die ein Fluid mit guten Schmiereigenschaften verlangt Wegen der höheren Elastizität einer Druckflüssigkeit gegenüber einem Metall werden hochfrequente Schwingungen (Stöße) gedämpft und so die Lebensdauer der Mechanik (Zahnstange, Gewindetrieb, usw.) verlängert.

Es ist ein modularer Aufbau möglich, weil durch die Verwendung unterschiedlich vieler gleichartiger Eingangskolben verschiedene gewünschte Geschwindigkeiten eines Ausgangskolbens erhalten werden können.

Um Kunststoffgranulat zu plastifizieren, wird bei den Ausführungsbeispielen nach den Figuren 3 und 4 die Schaltkupplung 95 betätigt und der Elektromotor 51 in die eine Richtung drehend angesteuert. Über die Kupplungsscheibe 63 wird das Zahnrad 94 und über den Zahnriemen 96 und das Zahnrad 73 die Schnecke 140 drehend angetrieben. Dadurch wird Kunststoffmaterial vor das Ende der Schnekke gefördert. Dort entsteht ein Staudruck, der zu einer Rückwärtsbewegung der Schnecke und mit dieser des Kolbens 85 im Sinne einer Verkleinerung des Zylinderraums 88 führt. Aus dem Zylinderraum 88 wird Druckflüssigkeit über die Leitung 89 in den Zylinderraum 87 verdrängt und dadurch der Hydraulikkolben 83 einschließlich Gewindespindel 55 bzw. Zahnstange 99 verschoben. Dies geschieht bei geöffneter Schaltkupplung 53. Ohne weitere Maßnahmen wäre der Staudruck undefiniert. Um einen gewünschten Staudruck regeln zu können, kann bei den beiden Ausführungsbeispielen nach den Figuren 3 und 4 das Ausgangselement der Schaltkupplung 53, also die Spindelmutter 57 bzw. das Zahnrad 98 durch eine Bremse 100 definiert abgebremst werden, so daß sich das Ausgangselement 57 bzw. 98 nur gegen einen Widerstand drehen läßt. Dieser Widerstand kann durch verschieden starkes Bremsen variiert werden, um den gewünschten Staudruck zu erhalten. Erfassen läßt sich der Staudruck zum Beispiel durch eine Messung des in den Zylinderräumen 88 und 87 herrschenden Drucks.

Anstelle einer Bremse 100 kann auch ein (kleiner) elektrischer Staudruckmotor verwendet werden, von dem auf die Spindelmutter 57 bzw. auf das Zahnrad 98 ein Drehmoment ausgeübt wird.

Zum Schließen der Form ist bei den beiden Ausführungsbeispielen nach den Figuren 3 und 4 die Kupplung 52 betätigt, während die beiden Kupplungen 53 und 95 offen sind. Ansonsten läuft der Schließvorgang wie bei dem Ausführungsbeispiel nach Figur 1 ab.

Zum Einspritzen von Kunststoff in die Form ist die Schaltkupplung 95 offen und die Schaltkupplung 53 betätigt. Der Elektromotor 51 wird in eine Richtung drehend angesteuert, daß sich die Gewindespindel 55 bzw. die Zahnstange 99 die Kolbenstange 84 in das Zylindergehäuse der Kolben-Zylinder-Einheit 81 hineinbewegt. Der Hydraulikkolben 83 verdrängt Druckflüssigkeit aus dem Zylinderraum 87 über die Leitung 89 in den Zylinderraum 88. Dadurch wird der Ausgangskolben 85 des Kraftübersetzers 80 und mit ihm die Einspritzachse 66 mitsamt der Schnecke 140, in der Ansicht nach den Figuren 3 und 4 nach links bewegt Für diese Bewegung muß vom Hydraulikkolben 85 eine bestimmte Kraft aufgebracht werden. Die vom Elektromotor 51 aufzubringende Kraft ist um einen Faktor kleiner, der gleich dem Verhältnis der Größe der Wirkflächen der beiden Hydraulikkolben 85 und 83 ist. Der vom Eingangskolben 83 zurückgelegte Weg ist um einen Faktor gleich dem reziproken Verhältnis größer als der Weg des Ausgangskolbens 85. Durch Drukkerfassung in einem der Zylinderräume 87 und 88 des hydraulischen Kraftübersetzers kann ein gewünschter Einspritzdruck genau eingehalten werden.

Als Variante zu den beiden Ausführungsbeispielen nach den Figuren 3 und 4 ist eine Antriebsvorrichtung denkbar, bei der die Schaltkupplung 53 durch eine stetig verstellbare Kupplung ersetzt ist, wobei dann für die beiden Kupplungen zwei Eingangselemente vorhanden sind. Dann könnte beim Plastifizieren ein Staudruck durch eine entsprechende Betätigung der Kupplung 53 eingestellt werden. Dazu dreht dann der Elektromotor 51 zum Plastifizieren in eine Richtung, die der Drehrichtung der Spindelmutter 57 bzw. des Zahnrades 98 beim Zurückfahren der Gewindespindel 55 bzw. der Zahnstange 99 entgegengesetzt ist.

Ähnlich wie bei den beiden Ausführungsbeispielen nach den Figuren 3 und 4 kann auch bei derjenigen nach Figur 1 eine Bremse oder ein kleiner Staudruckmotor verwendet werden, der auf die Spindelmutter 57 wirkt, um im plastifizierten Kunststoffmaterial einen Staudruck einzustellen. Die Kupplung 53 wäre dann während des Plastifizierens offen. Der Elektromotor könnte schon während des Plastifizierens über die betätigte Kupplung 52 die Hydraulikkolben 27 und 37 verschieben, um die Form zu schließen.

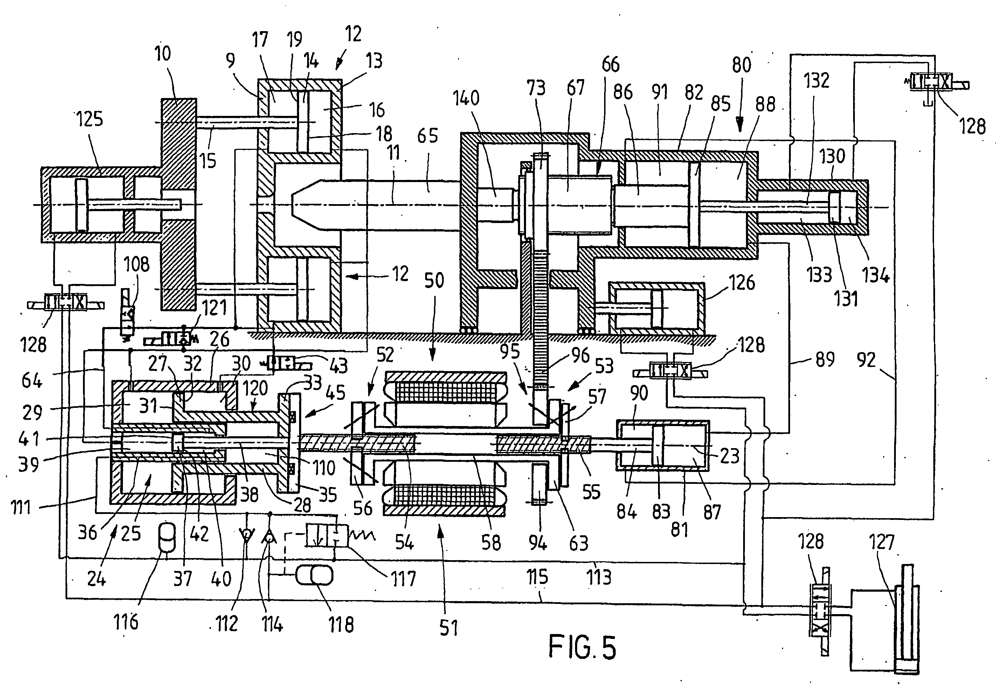

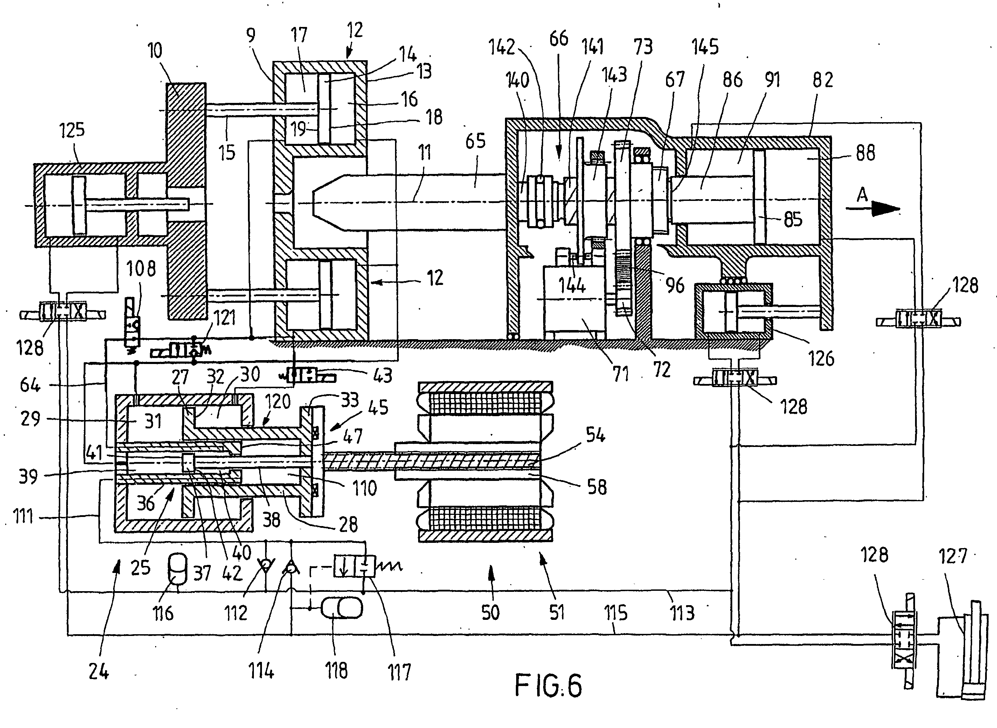

Auch bei den Ausführungsbeispielen nach den Figuren 5 und 6 besitzt eine Kunststoffspritzgießmaschine eine bewegliche Formaufspannplatte 10, die an einem Maschinengestell geradlinig gegenüber einer ortsfesten Formaufspannplatte 9 verfahrbar geführt ist. Mit ihren Achsen in Verfahrrichtung ausgerichtet und sich bezüglich der Mittelachse 11 der Form einander diametral gegenüberliegend sind an der ortsfesten Formaufspannplatte 9 zwei erste Kolben-Zylinder-Einheiten 12 mit jeweils einem ersten Zylindergehäuse 13 und einem ersten Hydraulikkolben 14 befestigt. Eine Kolbenstange 15 an jedem Hydraulikkolben 14 geht durch die ortsfeste Formaufspannplatte 9 hindurch und ist an ihrem Ende an der beweglichen Formaufspannplatte 10 befestigt. Jeder Hydraulikkolben 14 ist also wiederum ein Differenzkolben, der das Innere seines Zylindergehäuses 13 in einen im Querschnitt kreiszylindrischen, kolbenstangenabseitigen Zylinderraum 16 und einen auf der Seite der Kolbenstange befindlichen (kolbenstangenseitigen) ringförmigen Zylinderraum 17 aufteilt An den Zylinderraum 16 grenzt der Hydraulikkolben 14 mit einer kreisscheibenförmigen Wirkfläche 18 und an den Zylinderraum mit einer ringförmigen Wirkfläche 19 an. Beide Zylinderräume 16 und 17 sind mit Druckmittel gefüllt. Anders als bei den Ausführungsbeispielen nach den Figuren 1 bis 4 wird nun ein flüssiges Druckmittel zum Verfahren der Formaufspannplatte 10 in Richtung Schließen der Form den Zylinderräumen 17 und zum Verfahren der Formaufspannplatte 10 in Richtung Öffnen den Zylinderräumen 16 der Kolben-Zylinder-Einheiten 12 zugeführt und aus den jeweils anderen Zylinderräumen verdrängt. Beim Schließen und Zuhalten der Form werden also die Kolbenstangen 15 auf Zug und beim Öffnen der Form auf Druck beansprucht.

Die Zufuhr und die Verdrängung von Druckmittel erfolgt wie bei den Ausführungsbeispielen nach den Figuren 1 bis 4 von und zu einer zweiten Kolben-Zylinder-Einheit 24 und einer dritten Kolben-Zylinder-Einheit 25, die weitgehend so wie bei den Ausführungsbeispielen nach den Figuren 1 bis 4 aufgebaut sind. Letztere Einheit 25 weist demnach wieder ein gestellfestes Zylindergehäuse 36 auf, dessen Innendurchmesser wesentlich kleiner, zum Beispiel dreimal kleiner als der Innendurchmesser jedes Zylindergehäuses 13 ist. In dem Zylindergehäuse 36 ist ein als Differenzkolben ausgebildeter Hydraulikkolben 37 axial beweglich, mit dem eine aus dem Zylindergehäuse 36 herausragende Kolbenstange 38 verbunden ist und der das Innere des Zylindergehäuses 36 abgedichtet in einen kolbenstangenabseitigen, im Querschnitt kreiszylindrischen Zylinderraum 39 und einen kolbenstangenseitigen, ringförmigen Zylinderraum 40 aufteilt. An den Zylinderraum 39 grenzt der Hydraulikkolben 37 mit einer kreisscheibenförmigen Wirkfläche 41 und an den Zylinderraum 40 mit einer ringförmigen Wirkfläche 42 an. Entsprechend dem Unterschied in den Innendurchmessern der Zylindergehäuse 13 und 36 ist die Wirkfläche 42 des Hydraulikkolbens 37 wesentlich kleiner als die Wirkfläche 19 der Hydraulikkolben 14. Ebenso ist die Wirkfläche 41 wesentlich kleiner als die Wirkflächen 18.

Die Kolben-Zylinder-Einheit 24 ist ringzylindrisch ausgebildet und umgibt die Kolben-Zylinder-Einheit 25. Sie besitzt ein gestellfestes Zylindergehäuse 26, das eine äußere Zylinderwand und eine innere Zylinderwand umfaßt. Letztere ist zugleich das Zylindergehäuse 36 der Kolben-Zylinder-Einheit 25. In dem Zylindergehäuse 26 ist ein als Differenzkolben ausgebildeter, ringförmiger Hydraulikkolben 27 axial beweglich, mit dem eine aus dem Zylindergehäuse 26 in dieselbe Richtung wie die Kolbenstange 38 des Hydraulikkolbens 37 herausragende büchsenartige Kolbenstange 28 verbunden ist und der das Innere des Zylindergehäuses 26 abgedichtet in einen kolbenstangenabseitigen, größeren ringförmigen Zylinderraum 29 und einen auf der Seite der Kolbenstange 28 befindlichen, kleineren ringförmigen Zylinderraum 30 aufteilt. An den Zylinderraum 29 grenzt der Hydraulikkolben 27 mit einer großen ringförmigen Wirkfläche 31 und an den Zylinderraum 30 mit einer kleineren ringförmigen Wirkfläche 32 an. Die Wirkfläche 31 des Hydraulikkolbens 27 ist etwa so groß wie die Summe der Wirkflächen 18 der Hydraulikkolben 14. Ebenso ist die Wirkfläche 32 etwa so groß wie die Summe der Wirkflächen 19. Die Kolbenstange 38 tritt abgedichtet an einer Stirnseite 47 aus dem Zylindergehäuse 36 heraus und verläuft dann innerhalb der hohlen, büchsenartigen Kolbenstange 28. Anders als bei den Ausführungsbeispielen nach den Figuren 1 bis 4 verläßt die Kolbenstange 38 die hohle Kolbenstange 28 abgedichtet durch einen Deckel hindurch, der dem Innenbund 33 der Ausführungsbeispiele aus den Figuren 1 bis 4 entspricht und deshalb ebenfalls mit der Bezugszahl 33 versehen ist. Der Deckel 33 ist radial über den Außenumfang der Kolbenstange 28 hinaus vergrößert. Wiederum ist wie der Spalt zwischen der Außenseite der Kolbenstange 28 und dem Zylindergehäuse 26 auch der Spalt zwischen der Innenseite des Hydraulikkolben 27 bzw. der Kolbenstange 28 und dem Zylindergehäuse 36 abgedichtet.

Somit ist innerhalb der hohlen Kolbenstange 28 und axial zwischen der Stirnseite 47 des Zylindergehäuses 36 und dem Deckel 33 der Kolbenstange 28 ein abgeschlossener Verdrängerraum 110 geschaffen, dessen Volumen sich verkleinert, wenn die Kolbenstange 28 einfährt, und dessen Volumen sich vergrößert, wenn die Kolbenstange 28 ausfährt. Die Bewegung der Kolbenstange 38 hat keinen Einfluß auf das Volumen des Verdrängerraums. Dieser ist wie die Zylinderräume der Kolben-Zylinder-Einheit 12, 24 und 25 mit Druckmittel gefüllt. Zu dem Verdrängerraum 110 führt, teilweise durch das Zylindergehäuse 36 hindurch, eine Leitung 111, die über ein zu ihr hin öffnendes Rückschlagventil 112 mit einer Niederdruckleitung 113 und über ein zu ihr hin sperrendes Rückschlagventil 114 mit einer Hochdruckleitung 115 fluidisch verbindbar ist An die Niederdruckleitung ist ein Niederdruckhydrospeicher 116 und an die Hochdruckleitung ist ein durch ein Speicherladeventil 117 abgesicherter Hochdruckspeicher 118 angeschlossen. Somit kann beim Ausfahren der Kolbenstange 28 und sich vergrößemdem Verdrängerraum 110 aus dem Niederdruckhydrospeicher über das Rückschlagventil 112 und die Leitung 111 Druckmittel in den Verdrängerraum 110 einströmen. Beim Einfahren der Kolbenstange 28 wird über die Leitung 111 und das Rückschlagventil 114 Druckmittel aus dem Verdrängerraum in den Hochdruckhydrospeicher verdrängt. Die Kolbenstange 28 kann somit als das Verdrängerelement und das Zylindergehäuse 36 als das Gehäuse einer Plungerpumpe angesehen werden, die insgesamt mit der Bezugszahl 120 bezeichnet ist und deren Saugventil das Rückschlagventil 112 und deren Druckventil das Rückschlagventil 114 ist.

Die Zylinderräume 16, 29 und 39 der Kolben-Zylinder-Einheiten 12, 24 und 25 sind bei den Ausführungsbeispielen nach den Figuren 5 und 6 fluidisch offen zueinander, so daß zwischen ihnen in jeder Betriebsphase ungehindert ein Austausch von Druckflüssigkeit stattfinden kann. Die Zylinderräume 17 der Kolben-Zylinder-Einheiten 12 sind über ein elektromagnetisch betätigbares 2/2-Wege-Sitzventil 43 mit dem Zylinderraum 30 der Kolben-Zylinder-Einheit 24 und über ein weiteres elektromagnetisch betätigbares 2/2-Wege-Sitzventil 108 mit dem Zylinderraum 40 der Kolben-Zylinder-Einheit 25 fluidisch verbindbar. In der Ruhestellung der beiden Ventile 43 und 108 sind die Zylinderräume 17 zu den Zylinderräumen 30 und 40 leckagefrei abgesperrt. Der in den Zylinderräumen 16 herrschende Druck wirkt dabei schließend auf die Ventilglieder der Ventile 43 und 108.

Schließlich ist ein drittes elektromagnetisch betätigbares 2/2-Wege-Sitzventil 121 vorhanden, das zwischen die Zylinderräume 16 und die Zylinderräume 17 der Kolben-Zylinder-Einheiten 12 geschaltet ist. Wenn sich alle drei Ventile 43, 108 und 121 in ihrer Durchgangsstellung befinden, sind darüber die Zylinderräume 29, 30, 39 und 40 der Kolben-Zylinder-Einheiten 24 und 25 fluidisch miteinander verbunden.

Die beiden Kolbenstangen 28 und 38 der beiden Ausführungsbeispiele nach den Figuren 5 und 6 sind über eine Koppelungseinrichtung 45, die nun als schaltbare Magnetkupplung ausgebildet ist, fest miteinander verbindbar. Dazu ist an der Kolbenstange 38 außerhalb der Kolbenstange 28 eine Scheibe befestigt, die der Scheibe 35 aus den Figuren 1 bis 4 entspricht, die eine elektrische Wicklung trägt und die durch Magnetkraft am Deckel 33 der Kolbenstange 28 gehalten werden kann. Somit kann von der Scheibe 35 die Kolbenstange 28 in die eine Richtung durch Anlage der Scheibe am Deckel 33 formschlüssig mitgenommen werden. In die andere Richtung ist eine Mitnahme der Kolbenstange 28 durch die Scheibe bei eingeschaltetem Elektromagneten aufgrund der Magnetkraft möglich.

Die beiden Ausführungsbeispiele nach den Figuren 5 und 6 umfassen jeweils einen elektromotorischen Antrieb 50, der wie bei den Ausführungsbeispielen nach den Figuren 1 und 3 angeordnet ist. Bei dem Ausführungsbeispiel nach Figur 6 dient der Elektromotor 51 wie bei dem Ausführungsbeispiel nach Figur 2 nur zum Antrieb eines bewegbaren Glieds der Schließeinheit einer Kunststoffspritzgießmaschine. Dementsprechend umfaßt der elektromotorische Antrieb 50 des Ausführungsbeispiels nach Figur 6 einen Elektromotor 51, der als Hohlwellenmotor mit einer Hohlwelle 58 ausgebildet, die nur eine mit der Kolbenstange 38 verbundene Gewindespindel 54 aufnimmt Die Hohlwelle 58 ist innen mit einem Trapezgewinde oder einem Kugelrollgewinde versehen. Die gegen Verdrehen gesicherte Gewindespindel 54 trägt ein entsprechendes Gewinde außen und ist über dieses mit der Hohlwelle 58 gekoppelt.

Bei dem Ausführungsbeispiel nach Figur 5 dagegen wird der Elektromotor 51 wie bei dem Ausführungsbeispiel nach Figur 3 auch zum linearen und drehenden Antrieb der Schnecke 140 einer Einspritzeinheit verwendet. Die sich innerhalb eines Plastifizierzylinders 65 befindliche Schnecke 140 ist Bestandteil einer Einspritzachse 66, die eine Keilwelle 67 mit Keilnuten umfaßt. Auf der Keilwelle 67 sitzt das Zahnrad 73, das mit Keilen in die Keilnuten der Keilwelle 67 eingreift. Somit ist die Keilwelle 67 einerseits verdrehsicher mit dem Zahnrad 73 gekoppelt, kann aber andererseits gegen das axial ortsfest gehaltene Zahnrad 73 axial verschoben werden. Über das Zahnrad 73 kann also die Schnecke 140 wieder unabhängig von ihrer axialen Position drehend angetrieben werden.

Der Elektromotor 51 hat bei dem Ausführungsbeispiel nach Figur 5 wie bei dem Ausführungsbeispiel nach Figur 3 eine rotierenden Hohlwelle 58, damit eine Gewindespindel 55, die zusammen mit einer Spindelmutter 57 einen Gewindetrieb bildet, Baulänge sparend eintauchen kann. Die Gewindespindel 55 ist wiederum gegen Verdrehen gesichert. Die Spindelmutter 57 dagegen ist das Ausgangselement einer Schaltkupplung 53 und über diese und die Hohlwelle 58 von dem Elektromotor 51 rotierend antreibbar. Das Eingangselement der Schaltkupplung 53 bildet eine Kupplungsscheibe 63, die nahe an dem Ende der Hohlwelle, an dem die Gewindespindel 55 herausragt, axial verschiebbar, aber drehfest auf der Hohlwelle 58 geführt ist. Die Spindelmutter 57 befindet sich auf der einen Seite der Kupplungsscheibe 63 vor dem Ende der Hohlwelle und greift dort in die Gewindespindel 55 ein. Über die Gewindespindel 55 kann die Schnecke 140 axial bewegt werden.

Auf der anderen Seite der Kupplungsscheibe 63 ist auf der Hohlwelle 55 axial ortsfest, aber drehbar ein Zahnrad 94 gelagert, das das Ausgangselement einer dritten Schaltkupplung 95 ist, die als Eingangselement dieselbe Scheibe 63 wie die Schaltkupplung 53 oder eine zweite Scheibe 63 hat. Das Zahnrad 94 befindet sich, in Richtung der Achsen 23 und 11 gesehen, genau auf Höhe des Zahnrades 73. Die beiden Zahnräder 73 und 94 sind Ober einen Zahnriemen 96 miteinander gekoppelt. Der Durchmesser des Zahnrades 94 ist größer als derjenige des Zahnrades 73, so daß man eine Drehzahlübersetzung erhält.

Zwischen der Gewindespindel 55 und der Keilwelle 67 ist auch bei dem Ausführungsbeispiel nach Figur 5 ein hydraulischer Kraftübersetzer 80 eingefügt, der wie bei dem Ausführungsbeispiel nach Figur 1 aussieht und eine Kolben-Zylinder-Einheit 81 mit einem als Differenzkolben 83 ausgebildeten und über eine Kolbenstange 84 an der Spindel 55 befestigten Eingangskolben und eine Kolben-Zylinder-Einheit 82 mit einem als Differenzkolben 85 ausgebildeten Ausgangskolben aufweist. Auf der einen Seite des Hydraulikkolbens 83 befindet sich der Zylinderraum 87 und auf der anderen Seite der Zylinderraum 90. Der Hydraulikkolben 85 grenzt an den Zylinderraum 88, der fluidisch mit dem Zylinderraum 87 verbunden ist, und an den Zylinderraum 91 an, der mit dem Zylinderraum 90 fluidisch verbunden ist.

Die Antriebsvorrichtung nach Figur 5 weist noch mehrere Hydraulikzylinder für sogenannte Nebenbewegungen auf. Gezeigt ist ein Auswerferzylinder 125, der an der beweglichen Formaufspannplatte 10 befestigt ist, ein Düsenverfahrzylinder 126, mit dem das gesamte Einspritzaggregat und damit auch die Einspritzdüse an die ortsfeste Formaufspannplatte 9 heran- und davon weggefahren werden kann, und ein Kernzugzylinder 127. Diese Hydraulikzylinder sind nach Richtung und Geschwindigkeit jeweils von einem proportional verstellbaren 4/3-Wegeventil 128 steuerbar. Dabei fließt ihnen Druckmittel aus dem Hochdruckhydrospeicher 118 zu. Druckmittelquelle für diese hydraulischen Verbraucher 125, 126 und 127 ist somit letztendlich die Plungerpumpe 120. Aus den Hydraulikzylindern verdrängtes Druckmittel fließt zurück zum Niederdruckhydrospeicher 116.

Um während des Plastifizierens von Kunststoff darin einen gewissen Staudruck erzeugen zu können, weist das Ausführungsbeispiel nach Figur 5 noch einen als Differenzzylinder ausgebildeten Staudruckzylinder 130 auf. Dieser ist achsgleich an die Kolben-Zylinder-Einheit 82 angebaut und hat einen Differenzkolben 131 mit einer Kolbenstange 132, die in die Kolben-Zylinder-Einheit 82 hineinragt und darin an dem Hydraulikkolben 85 befestigt ist. Der Differenzkolben 131 teilt das Innere des Hydraulikzylinders 130 in einen kolbenstangenseitigen, ringförmigen Zylinderraum 133 und in einen kolbenstangenabseitigen, kreiszylindrischen Zylinderraum 134 auf. Auch der Hydraulikzylinder 130 ist von einem proportional verstellbaren Wegeventil 128 steuerbar, das einerseits an den Hochdruckhydrospeicher 118 und andererseits an den Niederdruckhydrospeicher 116 angeschlossen ist. Wird dabei nur ein gedrosselter Ablauf von Druckmittel aus dem Zylinderraum 134 erlaubt, so baut sich ein Staudruck größer Atmosphärendruck auf. Wird dagegen der Zylinderraum 133 mit Druck beaufschlagt, kann der Staudruck kleiner als Atmosphärendruck gemacht werden.

Auch das Ausführungsbeispiel nach Figur 6 hat einen Auswerferzylinder 125, einen Düsenverfahrzylinder 126 und einen Kernzugzylinder 127, von denen jeder über ein Wegeventil 128 mit dem Hochdruckhydrospeicher 118 und dem Niederdruckhydrospeicher 116 fluidisch verbindbar ist. Anders als bei dem Ausführungsbeispiel nach Figur 5 ist nun die Kolben-Zylinder-Einheit 82 nicht mit einer weiteren Kolben-Zylinder-Einheit in einem geschlossenen hydraulischen Kreis angeordnet. Die Kolben-Zylinder-Einheit 82 mit dem die zwei Zylinderräume 88 und 91 voneinander trennenden Differenzkolben 85 ist vielmehr über ein weiteres proportional verstellbares Wegeventil 128 ansteuerbar und mit den Hydrospeichern 116 und 118 fluidisch verbindbar. Der Hydraulikkolben 85 liegt in Flucht mit der sich in dem Plastifizierzylinder 65 befindlichen Plastifizier- und Einspritzschnecke 140. Zwischen dieser und dem Hydraulikkolben 85 sind folgende weitere Teile oder Komponenten angeordnet, die mit dem Hydraulikkolben und der Schnecke eine axial verschiebbare Einspritzachse 66 bilden. Einer an dem Hydraulikkolben 85 befestigten und aus dem Zylindergehäuse 82 herausragenden Kolbenstange 86 folgt ein Axiallager 145, dem eine Keilwelle 67, der eine Gewindespindel 141 und der ein Freilauf 142. Das Axiallager 145 läßt es zu, daß sich die Keilwelle 67 ohne ein Mitdrehen der Kolbenstange 86 drehen kann.

Wie bei dem Ausführungsbeispiel nach Figur 1 ist seitlich von Keilwelle 67 und Gewindespindel 141 ein kleiner elektrischer Normmotor 71 mit Drehzahlregelung angeordnet, der auf seiner Welle ein Ritzel 72 trägt, das mit einem auf der Keilwelle 14 sitzenden im Durchmesser größeren und axial ortsfest drehbar gelagerten Zahnrad 73 über einen Zahnriemen 96 gekoppelt ist. Das Zahnrad 73 greift mit Keilen in die Keilnuten der Keilwelle 67 ein. Somit ist die Keilwelle 67 einerseits verdrehsicher mit dem Zahnrad 73 gekoppelt, kann aber andererseits gegen das axial ortsfest gehaltene Zahnrad axial verschoben werden. Von dem Elektromotor 71 kann also die Schnecke unabhängig von ihrer axialen Position drehend angetrieben werden.

Die Gewindespindel 141 wirkt mit einer Spindelmutter 143 zusammen, die axial ortsfest drehbar gelagert ist und die von einer Bremse 144 gegen Drehung blokkiert werden kann.

In den Figuren 5 und 6 ist der Teil der Antriebsvorrichtung für die bewegliche Formaufspannplatte 10 in einem Zustand gezeigt, in dem die Form einer Kunststoffspritzgießmaschine geöffnet ist. Soll nun die Form geschlossen werden, so wird der Elektromotor 51 so gesteuert, daß sich die Hohlwelle 58 in eine solche Richtung dreht, daß die Gewindespindel 54 weiter in die Hohlwelle hineinfährt. Dabei ist bei dem Ausführungsbeispiel nach Figur 5 die Kupplung 52 geschlossen. Außerdem ist die Magnetkupplung 45 wirksam. Die Gewindespindel 54 verschiebt die Kolbenstange 38 mitsamt Hydraulikkolben 37 und über die Magnetkupplung 45 auch den Hydraulikkolben 27. Die Ventile 43 und 108 sind offen. Das Ventil 121 ist geschlossen. Aus den Zylinderräumen 30 und 40 wird Druckflüssigkeit in die Zylinderräume 17 der Kolben-Zylinder-Einheiten 12 verdrängt, so daß die Kolbenstangen 15 der Hydraulikkolben 14 einfahren und sich die Formaufspannplatte 10 in Schließrichtung bewegt. Die Bewegung der Formaufspannplatte 10 ist schnell, da wegen der großen Wirkfläche 32 des Hydraulikkolbens 27 viel Druckflüssigkeit aus dem Zylinderraum 30 verdrängt wird. Die beim Einfahren der Kolbenstangen 15 der Hydraulikkolben 14 aus den Zylinderraum 16 verdrängte Druckflüssigkeit wird von den Zylinderräumen 29 und 39 ohne Druckerhöhung aufgenommen. Während der Bewegung der Kolbenstange 28 vergrößert sich der Verdrängerraum 110, so daß ihm aus dem Niederdruckhydrospeicher 116, in dem zum Beispiel ein Druck bis zu 10 bar herrscht, Druckmittel zuströmt

Wenn die Form geschlossen ist, schließt das Ventil 43, so daß die sich im Zylinderraum 30 befindliche Druckflüssigkeit eingesperrt ist. Außerdem wird die Magnetkupplung 45 abgeschaltet. Im folgenden wird nur noch der Hydraulikkolben 37 mit der kleinen Wirkfläche 42 verschoben und dadurch ein hoher Druck in den Zylinderräumen 17 aufgebaut, der an den Wirkflächen 19 der Hydraulikkolben 14 eine hohe Schließkraft für die Form erzeugt. Nach dem Aufbau des hohen Drucks wird das Ventil 108 geschlossen, so daß dieser hohe Druck auch dann erhalten bleibt, wenn der Gewindetrieb nicht selbsthemmend ist und vom Elektromotor 51 keine Abstützkraft aufgebracht wird.

Zum Öffnen der Form wird zunächst das Ventil 108 geöffnet. Der Elektromotor 51 wird in umgekehrter Drehrichtung angetrieben, so daß die Gewindespindel 54 wieder aus der in die Hohlwelle 58 herauswandert. Dabei wird zuerst nur der Hydraulikkolben 37 mitgenommen und dabei die Druckflüssigkeit in den Zylinderräumen 17 dekomprimiert. Dann wird auch das Ventil 43 geöffnet. Stößt dann die Scheibe 35 gegen die Kolbenstange 28, fahren beide Hydraulikkolben 27 und 37 zurück und verdrängen Druckflüssigkeit aus den Zylinderräumen 29 und 39 in die Zylinderräume 16, so daß die Hydraulikkolben 14 die Kolbenstangen 15 ausfahren und die bewegliche Formaufspannplatte 10 in Öffnungsstellung bringen. Da sich dabei bei der Verdrängerraum 110 verkleinert, wird in ihm enthaltenes Druckmittel über das Rückschlagventil 114 in den Hochdruckhydrospeicher 118 verdrängt. Jeder Maschinenzyklus bedeutet somit auch einen Zyklus der Plungerpumpe 120.

Bei den beiden Ausführungsbeispielen nach den Figuren 5 und 6 tritt im Mittel der höhere Druck in den kolbenstangenseitigen Zylinderräumen 17, 30 und 40 auf. Eine innere Leckage wird also von den kolbenstangenseitigen Zylinderräumen aus in die kolbenstangenabseitigen Zylinderräume 16, 29 und 39 erfolgen. Dadurch werden der zweite und der dritte Hydraulikkolben 27 und 37 während des Betriebs im Sinne einer allmählichen Verkleinerung der kolbenstangenseitigen Zylinderräume 30 und 40 driften. Diese Drift wird regelmäßig ausgeglichen. Dazu wird die bewegliche Formaufspannplatte 10 bis auf einen mechanischen Anschlag in eine vollständig geöffnete Position gefahren. Anschließend wird das Ventil 121 geöffnet, woraufhin die Hydraulikkolben 27 und 37 in die der vollständig geöffneten Formaufspannplatte 10 entsprechende Position gefahren werden. Dann wird das Ventil 121 wieder in seine Sperrstellung geschaltet. Die Einstellung ist beendet.

Um Kunststoffgranulat zu plastifizieren, wird bei dem Ausführungsbeispiel nach Figur 5 die Schaltkupplung 95 betätigt und der Elektromotor 51 in die eine Richtung drehend angesteuert. Über die Kupplungsscheibe 63 wird das Zahnrad 94 und über den Zahnriemen 96 und das Zahnrad 73 die Schnecke 140 drehend angetrieben. Dadurch wird Kunststoffmaterial vor das Ende der Schnecke gefördert. Dort entsteht ein Staudruck, der zu einer Rückwärtsbewegung der Schnecke und des Hydraulikkolbens 85 im Sinne einer Verkleinerung des Zylinderraums 88 führt. Aus dem Zylinderraum 88 wird Druckflüssigkeit über die Leitung 89 in den Zylinderraum 81 verdrängt und dadurch der Hydraulikkolben 83 einschließlich Gewindespindel 55 bzw. Zahnstange 99 verschoben. Dies geschieht bei geöffneter Schaltkupplung 53. Ohne weitere Maßnahmen wäre der Staudruck undefiniert. Ein gewünschter Staudruck wird mit dem Staudruckzylinder 130 durch entsprechende Ansteuerung des zugehörigen Wegeventils 128 eingestellt. Erfassen läßt sich der Staudruck zum Beispiel durch eine Messung des in den Zylinderräumen 133 und 134 des Staudruckzylinders herrschenden Drucks.

Zum Einspritzen von Kunststoff in die Form ist die Schaltkupplung 95 offen und die Schaltkupplung 53 betätigt. Der Elektromotor 51 wird in eine Richtung drehend angesteuert, daß sich die Gewindespindel 55 die Kolbenstange 84 in das Zylindergehäuse der Kolben-Zylinder-Einheit 81 hineinbewegt. Der Hydraulikkolben 83 verdrängt Druckflüssigkeit aus dem Zylinderraum 87 über die Leitung 89 in den Zylinderraum 88. Dadurch wird der Ausgangskolben 85 des Kraftübersetzers 80 und mit ihm die Einspritzachse 66 mitsamt der Schnecke 140, in der Ansicht nach Figur 6 nach links bewegt. Der Staudruckzylinder 130 kann dabei unterstützend wirken, wozu sein Zylinderraum 134 über das zugehörige Wegeventil 128 mit dem Hochdruckhydrospeicher 118 und sein Zylinderraum 133 mit dem Niederdruckhydrospeicher verbunden ist.

Bei dem Ausführungsbeispiel nach Figur 6 wird zum Plastifizieren von Kunststoff die Schnecke 140 über die Keilwelle 67 und die wirksame Freilaufkupplung 142 von dem in eine erste Richtung drehenden Elektromotor 71 angetrieben. Dadurch wird Kunststoffmasse in den Raum vor das Ende der Schnecke gefördert. Die Spindelmutter 143 kann frei drehen. Die Schnecke 140 und mit dieser die gesamte Einspritzachse 66 und der Hydraulikkolben 85 werden durch den sich in dem Raum vor der Schnecke aufbauenden Staudruck rückwärts in Richtung des Pfeiles A belastet. Für den Staudruck ist eine bestimmte Höhe oder ein bestimmter Höhenverlauf gewünscht. Zu diesem Zweck wird, geregelt über das der Kolben-Zylinder-Einheit 82 zugeordnete Wegeventil 128, in dem Zylinderraum 88 ein bestimmter Druck aufrechterhalten.

Ist genügend Kunststoff plastifiziert, wird die Drehrichtung des Elektromotors 71 umgekehrt. Die Bremse 144 fällt ein und blockiert die Spindelmutter 143 gegen Drehung. Durch die Drehung des Elektromotors 71 wandert nun die Gewindespindel 141 axial vorwärts. Die Schnecke 140 wird ohne Drehbewegung aufgrund der jetzt nicht wirksamen Freilaufkupplung axial bewegt. Währenddessen ist über das Wegeventil 128 der Zylinderraum 88 der Kolben-Zylinder-Einheit 82 mit dem Hochdruckhydrospeicher 118 und der Zylinderraum 91 mit dem Niederdruckhydrospeicher 116 verbunden. Durch die dadurch auf den Hydraulikkolben 85 wirkende Kraft werden der Gewindetrieb zwischen der Gewindespindel 141 und der Spindelmutter 143 und der Elektromotor 71 entlastet. Dieser bestimmt die Geschwindigkeit der axialen Bewegung und damit den Einspritzdruck. Die von dem Hydraulikzylinder ausgeübte Kraft ist vorzugsweise kleiner als die zum Einspritzen notwendige Kraft, so daß der Elektromotor 71 antreibend wirkt. Ist die vom Hydraulikzylinder 82 ausgeübte Kraft zu groß, so muß der Elektromotor 71 bremsen.

Es ist leicht einsichtig, daß die Ausbildung des Einspritzaggregates gemäß Figur 6 mit einem Elektromotor, von dem die Schnecke zum Plastifizieren von Kunststoff gedreht wird und der beim Einspritzen die axiale Bewegung der Schnecke mit hydraulischer Unterstützung feinsteuert auch bei einer völlig anderen Antriebsvorrichtung für die Schließeinheit als sie in Figur 6 gezeigt ist, vorteilhaft ist. Auch könnte die Kolben-Zylinder-Einheit 82 auch von einem üblichen Hydraulikaggregat mit einer Axialkolbenpumpe oder einer Radialkolbenpumpe mit Druckmittel versorgt werden.

Bei dem Ausführungsbeispiel nach Figur 6 sind anders als bei demjenigen nach Figur 5 Plastifizieren von Kunststoff und Öffnen oder Schließen der Form zeitlich parallel zueinander möglich. Kupplungen entfallen.

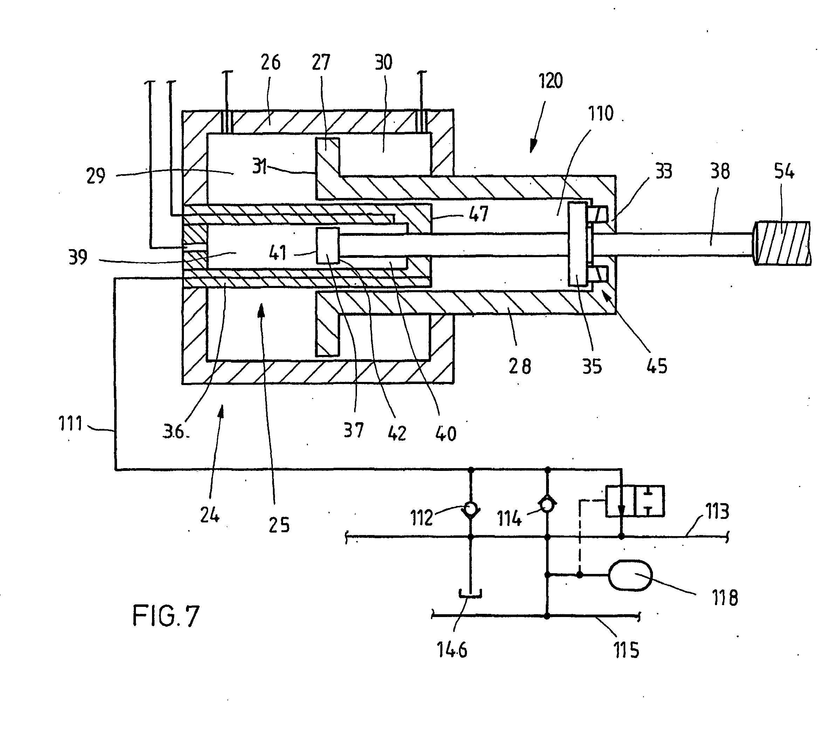

Die Integration einer Plungerpumpe 120 in die aus den beiden Kolben-Zylinder-Einheiten 24 und 25 bestehende Baueinheit ist, wie das Ausführungsbeispiel nach Figur 7 zeigt, auch dann möglich, wenn die Wirkrichtung der Hydraulikkolben 27 und 37 gleich derjenigen aus den Ausführungsbeispielen der Figuren 1 bis 4 ist. Bei dem Ausführungsbeispiel nach Figur 7 werden die Hydraulikkolben 27 und 37 zum Schließen einer Form also im Sinne einer Verkleinerung der Zylinderräume 29 und 39 verschoben. Die fluidischen Verbindungen der Zylinderräume 29 und 39 mit den Zylinderräumen eines Schließzylinders sind gleich denjenigen aus den Figuren 1 bis 4. Der konstruktive Aufbau der aus den beiden Kolben-Zylinder-Einheiten 24 und 25 bestehenden Baueinheit aus Figur 7 ist weitgehend gleich demjenigen aus den Figuren 1, 2 oder 3, so daß hier auf die entsprechenden Beschreibungsteile verwiesen werden kann und nur auf die Unterschiede eingegangen sei.

Es ist die Kolbenstange 38 des Hydraulikkolbens 37 über die sich innerhalb der Kolbenstange 28 befindlichen Scheibe 35 hinaus in Richtung auf den nicht gezeigten Elektromotor verlängert, so daß die Gewindespindel 54 erst in einem Abstand zu der Scheibe 35 beginnt. Der Durchmesser der Kolbenstange 38 ist auf der einen Seite der Scheibe 35 genauso groß wie auf der anderen Seite. Außerdem ist die Kolbenstange 28 wie bei den Ausführungsbeispielen nach den Figuren 5 und 6 büchsenartig ausgebildet und mit einem Boden versehen, der dem Bund 33 aus Figur 1 entspricht und deshalb mit derselben Bezugszahl versehen ist und durch den die Kolbenstange 28 abgedichtet hindurch tritt. Dadurch ist innerhalb der Kolbenstange 28 axial zwischen deren Boden 33 und der Stirnseite 47 des Zylindergehäuses 36 ein geschlossener Raum entstanden, dessen Volumen sich bei einer Verschiebung des Hydraulikkolben 27 ändert. Der Raum ist mit Druckmittel gefüllt und bildet einen Verdrängerraum 110 einer Plungerpumpe 120. Zu dem Verdrängerraum 110 führt, teilweise durch das Zylindergehäuse 36 hindurch, eine Leitung 111, die über ein zu ihr hin öffnendes Rückschlagventil 112 mit einer Niederdruckleitung 113 und, anstelle eines Niederdruckhydrospeichers wie in den Figuren 5 und 6, mit einem Tank 146 und über ein zu ihr hin sperrendes Rückschlagventil 114 mit einer Hochdruckleitung 115 und einem Hochdruckhydrospeicher 118 fluidisch verbindbar ist. Bei einer Verschiebung nur des Hydraulikkolbens 37 ändert sich das Volumen des Verdrängerraums 110 nicht, da die Kolbenstange 28 zu beiden Seiten der Scheibe 35 den gleichen Durchmesser hat.

Die Scheibe 35 ist Teil einer Magnetkupplung 45, deren elektrische Wicklung in den Boden 33 der Kolbenstange 28 eingelassen ist. Während des Schließens der Form einer Kunststoffspritzgießmaschine ist die Magnetkupplung wirksam, so daß beim Einfahren der Kolbenstange 38 in das Zylindergehäuse 36 die Kolbenstange 28 und damit der Hydraulikkolben 27 mitgenommen werden. Wenn die Form geschlossen ist, wird die Magnetkupplung abgeschaltet und nur noch der Hydraulikkolben 37 weiterbewegt, um den hohen Zuhaltedruck aufzubauen. Beim Öffnen der Form stößt beim Zurückfahren des Hydraulikkolbens 37 die Scheibe 35 innen an den Boden 33. Der Hydraulikkolben 27 wird sodann formschlüssig mitgenommen.

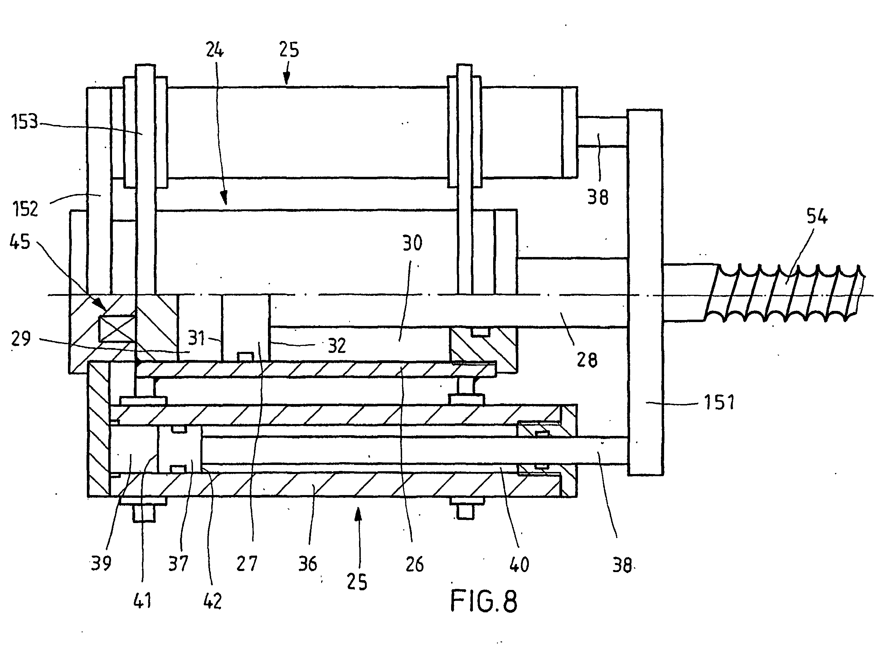

In Figur 8 ist eine weitere Ausführung der Zylinder-Kolben-Einheiten 24 und 25 mit einer Magnetkupplung 45 dargestellt, wobei sich diese nun nicht zwischen vom Antriebsmotor unterschiedlich bewegbaren Hydraulikkolben, sondern zwischen den zugehörigen Zylindergehäusen befindet ist. Während bei den Ausführungsbeispielen nach den Figuren 5 bis 7 die beiden Zylindergehäuse 26 und 36 ortsfest zum Maschinengestell angeordnet sind und im Krafthub der hohe Druck dadurch aufgebaut wird, daß der Hydraulikkolben 27 relativ zu seinem Zylindergehäuse 26 ruht und nur noch der Hydraulikkolben 37 weiterbewegt wird, ist bei dem Ausführungsbeispiel nach Figur 8 das eine Zylindergehäuse nach Lösen der Magnetkupplung 45 mit dem zugehörigen Hydraulikkolben mitbewegbar, so daß keine Volumenänderung der entsprechenden Druckräume mehr stattfindet. Das Prinzip, den gesamten Verdrängungsraum dadurch zu verkleinern, daß nach dem Schalten einer Kupplung zwischen dem einen Hydraulikkolben und dem zugehörigen Zylindergehäuse keine relative Bewegung mehr stattfindet, ist bei den Ausführungsbeispielen nach den Figuren 5 bis 8 gleich. Insofern stellt die Wirkungsweise des Ausführungsbeispiels nach Figur 8 lediglich eine kinematische Umkehrung der Wirkungsweise der Ausführungsbeispiele nach den Figuren 5 bis 7 dar.

Ein deutlicher Unterschied zwischen dem Ausführungsbeispiel nach Figur 8 und den Ausführungsbeispielen nach den Figuren 5 bis 7 besteht auch darin, daß nach Figur 8 die Zylinder-Kolben-Einheiten 24 und 25 in mehr aufgelöster Bauweise realisiert sind, nicht konzentrisch zueinander angeordnet sind und daß mehrere, insbesondere zwei Kolben-Zylinder-Einheiten 25 vorhanden sind, die mehrzählig symmetrisch zu einer Kolben-Zylinder-Einheit 24 liegen.

Im einzelnen ist die Kolben-Zylinder-Einheit 24 ein einfacher Differentialzylinder mit dem Zylindergehäuse 26 und dem darin befindlichen Differenzkolben als Hydraulikkolben 27, von dem einseitig die Kolbenstange 28 abgeht. Der Hydraulikkolben 27 grenzt kolbenstangenseitig mit der ringförmigen Wirkfläche 32 an den Druckraum 30 und kolbenstangenabseitig mit der kreisscheibenförmigen Wirkfläche 31 an den Druckraum 29 an. Einander bezüglich der Kolben-Zylinder-Einheit 24 diametral gegenüberliegend sind zwei Kolben-Zylinder-Einheiten 25 vorhanden, von denen jede ebenfalls ein einfacher Differentialzylinder mit einem Zylindergehäuse 36 und mit einem Differenzkolben als Hydraulikkolben 37 ist. Von diesen geht einseitig jeweils die Kolbenstange 38 ab. Jeder Hydraulikkolben 37 grenzt kolbenstangenseitig mit der ringförmigen Wirkfläche 42 an den Druckraum 40 und kolbenstangenabseitig mit der kreisscheibenförmigen Wirkfläche 41 an den Druckraum 39 an. Die drei Kolbenstangen sind über eine Traverse 151 fest miteinander und mit einer Gewindespindel 54 verbunden, die von einem nicht näher dargestellten Antriebsmotor verfahrbar ist. Durch die nicht konzentrische Anordnung der Kolben-Zylinder-Einheiten 24 und 25 ist die Gewindespindel gegen Verdrehen gesichert.

Das Zylindergehäuse 26 ist mit Laschen 153 versehen, mit denen es auf den Zylindergehäusen 36 längsgeführt ist. Vor der Bodenseite des Zylindergehäuses 26 erstreckt sich von Zylindergehäuse 25 zu Zylindergehäuse 25 ein Träger 152, an dem elektrischen Teile der magnetischen Schaltkupplung 45 befestigt sind. Diese vermag in ihrem einen Schaltzustand das Zylindergehäuse 26 festzuhalten, so daß dieses wie die Zylindergehäuse 36 ortsfest zum Maschinengestell ist. Im anderen Zustand der Magnetkupplung 45 kann das Zylindergehäuse 26 längs der Zylindergehäuse 36 bewegt werden. Beim Ausführungsbeispiel nach Figur 8 sind also wesentliche Teile der Magnetkupplung 45 ortsfest angeordnet.

Bei einer Antriebsvorrichtung mit zweiten und dritten Kolben-Zylinder-Einheiten 24 und 25 nach Figur 8 ist während des Schließens der Form einer Kunststoffspritzgießmaschine die Magnetkupplung 45 wirksam, so daß beim Ausfahren der Kolbenstangen 28 und 38 außer den Zylindergehäusen 36 auch das Zylindergehäuse 26 ruht. Aus den Druckräumen 30 und 40 wird Druckflüssigkeit in die Zylinderräume 17 nach den Figuren 5 und 6 verdrängt, so daß die Kolbenstangen 15 der Hydraulikkolben 14 einfahren und sich die Formaufspannplatte 10 in Schließrichtung bewegt. Die Bewegung der Formaufspannplatte 10 ist schnell, da wegen der großen Wirkfläche 32 des Hydraulikkolbens 27 viel Druckflüssigkeit aus dem Zylinderraum 30 verdrängt wird. Die beim Einfahren der Kolbenstangen 15 der Hydraulikkolben 14 aus den Zylinderraum 16 verdrängte Druckflüssigkeit wird von den Zylinderräumen 29 und 39 ohne Druckerhöhung aufgenommen.

Wenn die Form geschlossen ist, schließt das Ventil 43 aus Figur 5 oder 6, so daß die sich im Zylinderraum 30 befindliche Druckflüssigkeit eingesperrt ist. Außerdem wird die Magnetkupplung 45 abgeschaltet. Im folgenden wird das Zylindergehäuse 26 mit dem Hydraulikkolben 27 mitbewegt, ohne daß sich der Druck im Druckraum 30 verändern würde. Wirksam sind nur noch die beiden Hydraulikkolben 37 mit den kleinen Wirkflächen 42, so daß bei begrenzter Belastung der Gewindespindel 54 und des Antriebsmotors ein hoher Druck in den Zylinderräumen 17 aufgebaut wird, der an den Wirkflächen 19 der Hydraulikkolben 14 eine hohe Schließkraft für die Form erzeugt. Nach dem Aufbau des hohen Drucks wird das Ventil 108 geschlossen, so daß dieser hohe Druck auch dann erhalten bleibt, wenn der Gewindetrieb nicht selbsthemmend ist und vom Antriebsmotor keine Abstützkraft aufgebracht wird.

Zum Öffnen der Form wird zunächst das Ventil 108 geöffnet. Der Antriebsmotor wird in umgekehrter Drehrichtung angetrieben und wandert zusammen mit den Hydraulikkolben 27 und 37, nach Figur 8 betrachtet, nach links. Dabei wird zuerst das Zylindergehäuse 26 an den Träger 152 herangebracht, währenddessen die Druckflüssigkeit in den Zylinderräumen 17 dekomprimiert wird, und verbleibt dann mitsamt den Zylindergehäusen 36 in Ruhe. Dann wird auch das Ventil 43 geöffnet. Im folgenden werden alle drei Hydraulikkolben 27 und 37 relativ zu den Zylindergehäusen bewegt und dadurch die bewegliche Formaufspannplatte 10 in Öffnungsstellung bringen.

Vor dem nächsten Schließhub wird die Magnetkupplung 45 wieder wirksam geschaltet.

## Patentansprüche

1. Antriebsvorrichtung, insbesondere für ein bewegbares Glied (10, 66) der Schließeinheit, der Einspritzeinheit oder der Auswerfereinheit einer Kunststoffspritzgießmaschine,
mit einer ein geradlinig bewegbares Ausgangselement (54) und einen Elektromotor (51) aufweisenden elektromotorischen Antriebseinheit (50) und
mit wenigstens einer ersten Kolben-Zylinder-Einheit (12), die ein erstes Zylindergehäuse (13) und einen ersten Hydraulikkolben (14) aufweist, der mit einer ersten Wirkfläche (18, 19) einen mit Druckflüssigkeit gefüllten ersten Zylinderraum (18, 17) begrenzt und in der Kraftkette zwischen dem Ausgangselement (54) der elektromotorischen Antriebseinheit (50) und dem bewegbaren Bauteil (10, 66) liegt, **dadurch gekennzeichnet, daß** eine zweite Kolben-Zylinder-Einheit (24) vorhanden ist, die ein zweites Zylindergehäuse (26) und einen zweiten Hydraulikkolben (27) aufweist, der mit einer zweiten Wirkfläche (31, 32) einen zweiten mit Druckflüssigkeit gefüllten Zylinderraum (29, 30) begrenzt,
daß eine dritte Kolben-Zylinder-Einheit (25) vorhanden ist, die ein drittes Zylindergehäuse (36) und einen dritten Hydraulikkolben (37) aufweist, der mit einer dritten Wirkfläche (41, 42) einen dritten mit Druckflüssigkeit gefüllten Zylinderraum (39, 40) begrenzt und dessen Wirkfläche (41, 42) wesentlich kleiner als die erste Wirkfläche (18, 19) und die zweite Wirkfläche (31, 32) ist,
daß eine fluidische Verbindung zwischen dem ersten Zylinderraum (16, 17) und dem zweiten Zylinderraum (29, 30) über ein Ventil (43) steuerbar ist,
und daß vom Elektromotor (51) über das Ausgangselement (54) für eine Stellbewegung des bewegbaren Bauteils (10, 66) der zweite Hydraulikkolben (27) bei offenem Ventil (43) im Sinne eines Verdrängens von Druckflüssigkeit aus dem zweiten Zylinderraum (29, 30) in den ersten Zylinderraum (16, 17) verschiebbar ist und für die Ausübung einer großen Kraft auf das bewegbare Bauteil (10, 66) der dritte Hydraulikkolben (37) bei geschlossenem Ventil (43) im Sinne eines Verdrängens von Druckflüssigkeit aus dem dritten Zylinderraum (39, 40) in den ersten Zylinderraum (16, 17) verschiebbar ist.

2. Antriebsvorrichtung nach Anspruch 1, **dadurch gekennzeichnet, daß** das Ventil (43) ein Sitzventil ist, durch das der erste Zylinderraum (16, 17) zum zweiten Zylinderraum (29, 30) hin leckagefrei absperrbar ist.

3. Antriebsvorrichtung nach Anspruch 1 oder 2, **dadurch gekennzeichnet, daß** die zweite Kolben-Zylinder-Einheit (24) und die dritte Kolben-Zylinder-Einheit (25) zu einer gemeinsam handhabbaren Baueinheit zusammengefaßt sind.

4. Antriebsvorrichtung nach Anspruch 1, 2 oder 3, **dadurch gekennzeichnet, daß** der dritte Hydraulikkolben (37) vom Elektromotor (51) über eine Stange (38) verschiebbar ist, die in einem hohlen Bauteil (28) verläuft , über das der zweite Hydraulikkolben (27) vom Elektromotor (51) verschiebbar ist, daß die zweite Kolben-Zylinder-Einheit (24) einen Ringzylinder (26, 36) und einen darin befindlichen Ringkolben (27) besitzt und der dritte Hydraulikkolben (37) durch den Ringkolben (27) hindurch vom Elektromotor (51) verschiebbar ist und daß sich die dritte Kolben-Zylinder-Einheit (25) innerhalb der zweiten Kolben-Zylinder-Einheit (24) befindet.

5. Antriebsvorrichtung nach einem vorhergehenden Anspruch, **dadurch gekennzeichnet, daß** der erste Hydraulikkolben (14) vom Elektromotor (51) in zwei entgegengesetzte Richtungen bewegbar ist.

6. Antriebsvorrichtung nach Anspruch 5, **dadurch gekennzeichnet, daß** der erste Hydraulikkolben (14) ein Differenzkolben mit einem der ersten Wirkfläche (18) abgelegenen ersten ringförmigen Zylinderraum (17) ist, daß der zweite Hydraulikkolben (27) ein Differenzkolben mit einem der zweiten Wirkfläche (31) abgelegenen zweiten ringförmigen Zylinderraum (30) ist, daß der erste ringförmige Zylinderraum (17) und der zweite ringförmige Zylinderraum (30) fluidisch offen zueinander sind und daß der dritte Hydraulikkolben (37) ein Differenzkolben mit einem der dritten Wirkfläche (41) abgelegenen dritten ringförmigen Zylinderraum (40) ist, der zu den anderen ringförmigen Zylinderräumen (17, 30) fluidisch offen ist.

7. Antriebsvorrichtung nach Anspruch 5, **dadurch gekennzeichnet, daß** der erste Hydraulikkolben (14) ein Differenzkolben mit einem durch die erste Wirkfläche (19) begrenzten ersten ringförmigen Zylinderraum (17) und einem der ersten Wirkfläche (19) abgelegenen Zylinderraum (16) ist, daß der zweite Hydraulikkolben (27) ein Differenzkolben mit einem durch die zweite Wirkfläche (32) begrenzten zweiten ringförmigen Zylinderraum (30) und einem der zweiten Wirkfläche (32) abgelegenen Zylinderraum (29) ist, daß die den Wirkflächen (19, 32) abgelegenen Zylinderräume (16, 29) fluidisch offen zueinander sind, daß der dritte Hydraulikkolben (37) ein Differenzkolben mit einem durch die dritte Wirkfläche (42) begrenzten dritten ringförmigen Zylinderraum (40) und einem der dritten Wirkfläche (42) abgelegenen Zylinderraum (39) ist, der zu den anderen den Wirkflächen (19, 32) abgelegenen Zylinderräumen (16, 29) fluidisch offen ist.

8. Antriebsvorrichtung nach einem vorhergehenden Anspruch, **dadurch gekennzeichnet, daß** durch ein zusammen mit dem zweiten Hydraulikkolben (27) bewegbares Verdrängerelement (28) Druckfluid über ein Druckventil (114) aus einem Verdrängerraum (110) in einen Hochdruckhydrospeicher (118) verdrängbar und über ein Saugventil (112) aus einem Druckfluidniederdruckbehälter (116, 146), vorzugsweise einen Niederdruckhydrospeicher (116) ansaugbar ist, und daß zwischen wenigstens einem hydraulischen Verbraucher (125, 126, 127, 130, 82), dem Hochdruckhydrospeicher (118) und dem Druckfluidniederdruckbehälter (116, 146) die Druckfluidwege über ein Wegeventil (128) steuerbar.

9. Antriebsvorrichtung nach Anspruch 8, **dadurch gekennzeichnet, daß** der zweite Hydraulikkolben (27) ein Hohlkolben mit einer hohlen, büchsenartigen Kolbenstange (28) ist, in die das Zylindergehäuse (36) der dritten Kolben-Zylinder-Einheit (25) hineinragt und daß sich der Verdrängerraum (110) axial zwischen dem Zylindergehäuse (36) und dem Boden (33) der Kolbenstange (28) des zweiten Hydraulikkolben (27) befindet.

10. Antriebsvorrichtung nach einem vorhergehenden Anspruch, **dadurch gekennzeichnet, daß** das Ausgangselement (54) der elektromotorischen Antriebseinheit (50) und der dritte Hydraulikkolben (37) zumindest hinsichtlich einer Bewegung in axialer Richtung fest miteinander verbunden sind, daß eine Koppelungseinrichtung (45) vorhanden ist, die zwischen einem Teil (27, 26) der zweiten Kolben-Zylinder-Einheit (24) und dem funktionsmäßig gleichen Teil (37, 36) der dritten Kolben-Zylinder-Einheit (25) angeordnet ist und in deren einem Zustand beide Hydraulikkolben (27, 37) beider Kolben-Zylinder-Einheiten (24, 25) relativ zu den Zylindergehäusen (26, 36) bewegbar sind und in deren anderem Zustand nur der Hydraulikkolben (37) der einen Kolben-Zylinder-Einheit (25) relativ zum Zylindergehäuse (36) bewegbar ist.

11. Antriebsvorrichtung nach Anspruch 10, **dadurch gekennzeichnet, daß** das Ausgangselement (54) der elektromotorischen Antriebseinheit (50) und der dritte Hydraulikkolben (37) zumindest hinsichtlich einer Bewegung in axialer Richtung fest miteinander verbunden sind, daß eine Koppelungseinrichtung (45) vorhanden ist, durch die für eine Stellbewegung des bewegbaren Glieds (10) der zweite Hydraulikkolben (27) und der dritte Hydraulikkolben (37) lagefest miteinander gekoppelt sind, und daß für die Ausübung der hohen Kraft die feste Koppelung zwischen dem zweiten Hydraulikkolben (27) und dem dritten Hydraulikkolben (37) lösbar ist.

12. Antriebsvorrichtung nach Anspruch 10 oder 11, **dadurch gekennzeichnet, daß** die Koppelungseinrichtung (45) eine Feder (46) umfaßt, die zwischen dem zweiten Hydraulikkolben (27) und dem dritten Hydraulikkolben (37) eingespannt ist, daß der zweite Hydraulikkolben (27) und der dritte Hydraulikkolben (37) durch die Feder (46) axial aneinander andrückbar sind und daß bei axialer Anlage von drittem Hydraulikkolben (37) und zweitem Hydraulikkolben (27) die Vorspannkraft der Feder (46) größer ist als die zur Ausführung der Stellbewegung erforderliche Stellkraft.

13. Antriebsvorrichtung nach Anspruch 10 oder 11, **dadurch gekennzeichnet, daß** die Koppelungseinrichtung (45) eine Magnetkupplung ist.

14. Antriebsvorrichtung nach einem vorhergehenden Anspruch, **dadurch gekennzeichnet, daß** über eine Ventilanordnung (43, 108, 121) die beiden Zylinderräume (29, 30) zu den beiden Seiten des zweiten Hydraulikkolbens (27) miteinander und die beiden Zylinderräume (39, 40) zu beiden Seiten des dritten Hydraulikkolbens (37) miteinander fluidisch verbindbar sind.

15. Antriebsvorrichtung nach Anspruch 14, **dadurch gekennzeichnet, daß** die Ventilanordnung ein Ventil (121) aufweist, über das unmittelbar die beiden Zylinderräume (16, 17) zu den beiden Seiten des ersten Hydraulikkolbens (14) fluidisch miteinander verbindbar sind.

16. Antriebsvorrichtung nach einem vorhergehenden Anspruch, **dadurch gekennzeichnet, daß** von dem Elektromotor (51) über eine in einer ersten Kraftkette liegende erste schaltbare Kupplung (52) ein bewegbares Glied (10) der Schließeinheit und über eine in einer zweiten Kraftkette liegende zweite Kupplung (53) ein zum Einspritzen von Kunststoff in eine Form zu bewegendes Glied (66) der Einspritzeinheit antreibbar ist, daß die elektromotorische Antriebseinheit (50) ein erstes geradlinig bewegbares Ausgangselement (54, 107) und ein zweites geradlinig bewegbares Ausgangselement (55, 99) aufweist, und daß von dem Elektromotor (51) zum Schließen der Form das erste Ausgangselement (54, 107) über die wirksame erste Kupplung (52) in eine erste Richtung und zum Einspritzen von Kunststoff das zweite Ausgangselement (55, 99) über die wirksame zweite Kupplung (53) in die gleiche oder in die entgegengesetzte Richtung bewegbar ist.

17. Antriebsvorrichtung nach Anspruch 16, **dadurch gekennzeichnet, daß** von dem Elektromotor (51) die Schnecke über eine dritte Kupplung (95) drehend antreibbar ist.

18. Antriebsvorrichtung nach Anspruch 17, **dadurch gekennzeichnet, daß** bei gelöster zweiter Kupplung (53) ein Staudruck im plastifizierten Kunststoffmaterial durch Ansteuerung eines hydraulischen Staudruckzylinders (130) einstellbar ist und daß durch ein Wegeventil (128) Druckmittelwege zwischen dem Staudruckzylinder (130) und dem Hochdruckhydrospeicher (118) und /oder dem Niederdruckvorratsbehälter (116, 146) steuerbar sind.

19. Antriebsvorrichtung nach einem vorhergehenden Anspruch, **dadurch gekennzeichnet, daß** die Schnecke (140) über einen Gewindetrieb (141, 143) von einem Elektromotor (71) axial verfahrbar ist, daß zusätzlich ein Hydraulikzylinder (82) vorhanden ist, von dem zumindest während eines Einspritzvorgangs eine zusätzliche axiale Kraft auf die Schnecke (140) ausübbar ist und daß der Hydraulikzylinder (82) über ein Wegeventile (128) mit einem Hydrospeicher (118) verbindbar ist.

## Claims

1. A drive mechanism, particularly for a movable component (10, 66) of the clamping unit, the injection unit or the ejector unit of a plastics injection moulding machine, comprising an output element (54) movable in a straight line and an electric-motor drive unit (50) having an electric motor (51), and at least a first piston-cylinder unit (12), which has a first cylinder housing (13) and a first hydraulic piston (14) which, with a first active surface (18, 19), bounds a first cylinder chamber (16, 17) filled with pressure fluid and lies in a force chain between the output element (54) of the electric-motor drive unit (50) and the movable component (10, 66), **characterized in that** there is a second piston-cylinder unit (24), which has a second cylinder housing (26) and a second hydraulic piston (27) which, with a second active surface (31, 32), bounds a second cylinder chamber (29, 30) filled with pressure fluid, that a third piston-cylinder unit (25), which has a third cylinder housing (36) and a third hydraulic piston (37) which, with a third active surface (41, 42) bounds a third cylinder chamber (39, 40) filled with pressure fluid and whose active surface (41, 42) is substantially smaller than the first active surface (18, 19) and the second active surface (31, 32),
that a fluidic connection between the first cylinder chamber (16, 17) and the second cylinder chamber (29, 30) is controllable via a valve (43),
and that when the valve (43) is open, the second hydraulic piston (27) can be displaced by the electric motor (51) via the output element (54) for an actuating movement of the movable component (10, 66) with the effect of displacing pressure fluid out of the second cylinder chamber (29, 30) into the first cylinder chamber (16, 17) and, when the valve (43) is closed, the third hydraulic piston (37) can be displaced by the electric motor (51) via the output element (54) to exert a high force on the movable component (10, 66) with the effect of displacing pressure fluid out of the third cylinder chamber (39, 40) into the first cylinder chamber (16, 17).

2. A drive mechanism according to claim 1, **characterized in that** the valve (43) is a valve with a seat, by which the first cylinder chamber (16, 17) can be shut off in a leak-free manner with respect to the second cylinder chamber (29, 30).

3. A drive mechanism according to claim 1 or 2, **characterized in that** the second piston-cylinder unit (24) and the third piston-cylinder unit (25) are combined to form a structural unit that can be handled jointly.

4. A drive mechanism according to claim 1, 2 or 3, **characterized in that** the third hydraulic piston (37) is displaceable by the electric motor (51) via a rod (38) which runs in a hollow component (28) via which the second hydraulic piston (27) is displaceable by the electric motor (51), that the second piston-cylinder unit (24) has an annular cylinder (26, 36) and an annular piston (27) located therein, and the third hydraulic piston (37) is displaceable through the annular piston (27) by the electric motor (51), and that the third piston-cylinder unit (25) is inside the second piston-cylinder unit (24).

5. A drive mechanism according to any of the preceding claims, **characterized in that** the first hydraulic piston (14) is movable in two opposite directions by the electric motor (51).

6. A drive mechanism according to claim 5, **characterized in that** the first hydraulic piston (14) is a differential piston with a first annular cylinder chamber (17) remote from the first active surface (18), that the second hydraulic piston (27) is a differential piston with a second annular cylinder chamber (30) remote from the second active surface (31), and that the first annular cylinder chamber (17) and the second annular cylinder chamber (30) are fluidically open to each other, and that the third hydraulic piston (37) is a differential piston with a third annular cylinder chamber (40) remote from the third active surface (41), which is fluidically open to the other annular cylinder chambers (17, 30)

7. A drive mechanism according to claim 5, **characterized in that** the first hydraulic piston (14) is a differential piston with a first annular cylinder chamber (17) bounded by the first active surface (19) and with a cylinder chamber (16) remote from the first active surface (19), that the second hydraulic piston (27) is a differential piston with a second annular cylinder chamber (30) bounded by the second active surface (32) and a cylinder chamber (29) remote from the second active surface (32), that the cylinder chambers (16, 29) remote from the active surfaces (19, 32) are fluidically open to each other, and that the third hydraulic piston (37) is a differential piston with a third annular cylinder chamber (40) bounded by the third active surface (42) and a cylinder chamber (39) remote from the third active surface (42), which is fluidically open to the other cylinder chambers (16, 29) remote from the active surfaces (19, 32).

8. A drive mechanism according to any of the preceding claims, **characterized in that** by a displacement element (28) that is movable together with the second hydraulic piston (27) pressure fluid can be displaced via a pressure valve (114) from a displacement chamber (110) into a high pressure hydraulic accumulator (118) and can be sucked in via a suction valve (112) from a pressure fluid low pressure reservoir (116, 146), preferably a low pressure hydraulic accumulator (116), and that between at least one hydraulic consumer (125, 126, 127, 130, 82), the high pressure hydraulic accumulator (118) and the pressure fluid low pressure reservoir (116, 146), the pressure fluid paths are controllable via a directional control valve (128).

9. A drive mechanism according to claim 8, **characterized in that** the second hydraulic piston (27) is a hollow piston with a hollow, bush-like piston rod (28) into which the cylinder housing (36) of the third piston-cylinder unit (25) projects, and that the displacement chamber (110) is located axially between the cylinder housing (36) and the base (33) of the piston rod (28) of the second hydraulic piston (27).

10. A drive mechanism according to any of the preceding claims, **characterized in that** the output element (54) of the electric-motor drive unit (50) and the third hydraulic piston (37) are firmly connected to each other, at least with respect to a movement in axial direction, that there is a coupling device (45), which is arranged between a part (27, 26) of the second piston-cylinder unit (24) and the functionally identical part (37, 36) of the third piston-cylinder unit (25) and, in its one state, both the hydraulic pistons (27, 37) of the two piston-cylinder units (24, 25) are movable relative to the cylinder housings (26, 36) and, in its other state, only the hydraulic piston (37) of the one piston-cylinder unit (25) is movable relative to the cylinder housing (36).

11. A drive mechanism according to claim 10, **characterized in that** the output element (54) of the electric-motor drive unit (50) and the third hydraulic piston (37) are firmly connected to each other, at least with respect to movement in the axial direction, that there is a coupling device(45) by which, for an actuating movement of the movable component (10), the second hydraulic piston (27) and the third hydraulic piston (37) are coupled to each other in a fixed position, and that, so as to exert the high force, the fixed coupling between the second hydraulic piston (27) and the third hydraulic piston (37) is releasable.

12. A drive mechanism according to claim 10 or 11, **characterized in that** the coupling device (45) comprises a spring (46), which is clamped in between the second hydraulic piston (27) and the third hydraulic piston (37), that the second hydraulic piston (27) and the third hydraulic piston (37) are pressable axially against each other by the spring (46), and that when the third hydraulic piston (37) and the second hydraulic piston (27) are in axial contact, the prestressing force of the spring (46) is greater than the actuating force required to execute the actuating movement.

13. A drive mechanism according to claim 10 or 11, **characterized in that** the coupling device (45) is a magnetic coupling.

14. A drive mechanism according to any of the preceding claims, **characterized in that** via a valve arrangement (43, 108, 121), the two cylinder chambers (29, 30) on both sides of the second hydraulic piston (27) are connectable fluidically to each other, and the two cylinder chambers (39, 40) on both sides of the third hydraulic piston (37) are connectable fluidically to each other.

15. A drive mechanism according to claim 14, **characterized in that** the valve arrangement has a valve (121) via which the two cylinder chambers (16, 17) on both sides of the first hydraulic piston (14) are connectable fluidically directly to each other.

16. A drive mechanism, according to any of the preceding claims, **characterized in that** a movable component (10) of the clamping unit is drivable by the electric motor (51) via a first switchable coupling (52) lying in a first force chain, and a component (66) of the injection unit to be moved in order to inject plastic into a mould is drivable by the electric motor (51) via a second coupling (53) lying in a second force chain, and that the electric-motor drive unit (50) has a first output element (54, 107) that is movable in a straight line and a second output element (55, 99) that is movable in a straight line, and that to close the mould, the first output element (54, 107) is movable in a first direction via the active first coupling (52) and, to inject plastic, the second output element (55, 99) is movable in the same or in the opposite direction via the active second coupling (53).

17. A drive mechanism according to claim 16, **characterized in that** the screw is drivable in rotation by the electric motor (51) via a third coupling (95).

18. A drive mechanism according to claim 17, **characterized in that** when the second coupling (53) is released, a back pressure can be set in the plasticized plastic material by driving a hydraulic back-pressure cylinder (130), and that by a directional control valve (128), pressure medium paths between the back-pressure cylinder (130) and the high pressure hydraulic accumulator (118) and/or the low pressure storage reservoir (116, 146) can be controlled.

19. A drive mechanism according to any of the preceding claims, **characterized in that** the screw (140) is movable axially by an electric motor (71) via a screw drive (141, 143), that there is also a hydraulic cylinder (82) by which, at least during an injection operation, an additional axial force is exertable on the screw (140), and that the hydraulic cylinder (82) is connectable to a hydraulic accumulator (118) via a directional control valve (128).

## Revendications

1. Un dispositif d'entraînement, en particulier pour un élément (10, 66) mobile de l'unité de fermeture, de l'unité d'injection ou de l'unité d'éjection d'une machine à mouler le plastique par injection,
doté d'un élément (54) de sortie pouvant effectuer un mouvement linéaire et d'une unité (50) électromotrice d'entraînement présentant un moteur (51) électrique et
doté d'au moins un premier ensemble (12) piston vérin, qui présente un premier corps (13) de vérin et un premier piston (14), lequel délimite une première chambre (16, 17) de vérin remplie de fluide de pression au moyen d'une première surface (18, 19) active et est situé dans la chaîne de forces entre l'élément (54) de sortie de l'unité (50) électromotrice d'entraînement et l'élément (10, 66) constructif mobile,
**caractérisé en ce que** soit prévu un deuxième ensemble (24) piston vérin, qui présente un deuxième corps (26) de vérin et un deuxième piston (27) hydraulique, lequel délimite une deuxième chambre (29, 30) de vérin remplie de fluide de pression au moyen d'une deuxième surface (31, 32) active,
que soit prévu un troisième ensemble (25) piston vérin, qui présente un troisième corps (36) de vérin et un troisième piston (37) hydraulique, lequel délimite une troisième chambre (39, 40) de vérin remplie de fluide de pression au moyen d'une troisième surface (41, 42) active et dont la surface (41, 42) active est nettement inférieure à la première surface (18, 19) active et à la deuxième surface (31, 32) active,
qu'une connexion par voie fluide entre la première chambre (16, 17) de vérin et la deuxième chambre (29, 30) de vérin puisse être commandée au moyen d'une valve (43) et
qu'au moyen de l'élément (54) de sortie le moteur (51) électrique amène, pour une commande du mouvement de l'élément (10, 66) constructif mobile, lorsque la valve (43) est ouverte, le deuxième vérin (27) hydraulique à coulisser dans le sens d'un refoulement du fluide de pression hors de la deuxième chambre (29, 30) de vérin vers la première chambre (16, 17) de vérin et amène, pour le déploiement d'une grande force sur l'élément (10, 66) constructif mobile, lorsque la valve (43) est fermée, le troisième vérin (37) hydraulique à coulisser dans le sens d'un refoulement du fluide de pression hors de la troisième chambre (39, 40) de vérin vers la première chambre (16, 17) de vérin.

2. Un dispositif d'entraînement selon la revendication n° 1, **caractérisé en ce que** la valve (43) est une valve à siège de clapet, qui permet d'isoler sans aucune fuite la première chambre (16, 17) de vérin de la deuxième chambre (29, 30) de vérin.

3. Un dispositif d'entraînement selon la revendication n° 1 ou n° 2, **caractérisé en ce que** le deuxième ensemble (24) piston vérin et le troisième ensemble (25) piston vérin soient assemblés en une unité constructive commune, pouvant être manipulée.

4. Un dispositif d'entraînement selon la revendication n° 1, n° 2 ou n° 3, **caractérisé en ce que** le moteur (51) électrique puisse faire coulisser le troisième piston (37) hydraulique au moyen d'une tige (38), qui évolue à l'intérieur d'un élément (28) constructif creux, au moyen duquel le moteur (51) électrique peut faire coulisser le deuxième piston (27) hydraulique, que le deuxième ensemble (24) piston vérin présente un vérin (26, 36) annulaire, ainsi qu'un piston (27) annulaire disposé dans celui-ci, et le moteur (51) électrique puisse faire coulisser le troisième piston (37) hydraulique en passant au travers du piston (27) annulaire et que le troisième ensemble (25) piston vérin soit disposé à l'intérieur du deuxième ensemble (24) piston vérin.

5. Un dispositif d'entraînement selon une revendication précédente, **caractérisé en ce que** le moteur (51) électrique puisse faire bouger le premier piston (14) hydraulique dans deux sens opposés.

6. Un dispositif d'entraînement selon la revendication n° 5, **caractérisé en ce que** le premier piston (14) hydraulique soit un piston différentiel doté d'une première chambre (17) de vérin annulaire détournée de la première surface (18) active, que le deuxième piston (27) hydraulique soit un piston différentiel doté d'une deuxième chambre (30) de vérin annulaire détournée de la deuxième surface (31) active, que la première chambre (17) de vérin annulaire et la deuxième chambre (30) de vérin annulaire soient ouvertes l'une sur l'autre, par voie fluide, et que le troisième piston (37) hydraulique soit un piston différentiel doté d'une troisième chambre (40) de vérin annulaire, qui est détournée de la troisième surface (41) active et qui est ouverte sur les autres chambres (17, 30) de vérin annulaires, par voie fluide.

7. Un dispositif d'entraînement selon la revendication n° 5, **caractérisé en ce que** le premier piston (14) hydraulique soit un piston différentiel doté d'une première chambre (17) de vérin annulaire délimitée par la première surface (19) active et d'une chambre (16) de vérin détournée de la première surface (19) active, que le deuxième piston (27) hydraulique soit un piston différentiel doté d'une deuxième chambre (30) de vérin annulaire délimitée par la deuxième surface (32) active et d'une chambre (29) de vérin détournée de la deuxième surface (32) active, que les chambres (16, 29) de vérin détournées des surfaces (19, 32) actives soient ouvertes l'une sur l'autre, par voie fluide, et que le troisième piston (37) hydraulique soit un piston différentiel doté d'une troisième chambre (40) de vérin annulaire délimitée par la troisième surface (42) active et d'une chambre (39) de vérin, qui est détournée de la troisième surface (42) active et qui est ouverte, par voie fluide, sur les autres chambres (16, 29) de vérin détournées des surfaces (19, 32) actives.

8. Un dispositif d'entraînement selon une revendication précédente, **caractérisé en ce que,** au moyen d'un élément (28) de refoulement pouvant coulisser conjointement avec le deuxième piston (27) hydraulique, du fluide de pression puisse être refoulé au travers d'une valve (114) de pression hors d'une chambre (110) de refoulement vers un accumulateur (118) hydraulique à haute pression et puisse être aspiré au travers d'une valve (112) d'aspiration hors d'un réservoir (116, 146) de fluide de pression à basse pression, de préférence un accumulateur (116) hydraulique à basse pression, et qu'un distributeur (128) permette de commander les cheminements du fluide de pression entre au moins un récepteur (125, 126, 127, 130, 82) hydraulique, l'accumulateur (118) hydraulique à haute pression et le réservoir (116, 146) de fluide de pression à basse pression.

9. Un dispositif d'entraînement selon la revendication n° 8, **caractérisé en ce que** le deuxième piston (27) hydraulique soit un piston creux doté d'un tige (28) de vérin creuse, en forme de douille, dans laquelle pénètre le corps (36) de vérin du troisième ensemble (25) piston vérin et que la chambre (110) de refoulement soit située entre le corps (36) de vérin et le fond (33) de la tige (28) de vérin du deuxième piston (27) hydraulique, dans la direction axiale.

10. Un dispositif d'entraînement selon une revendication précédente, **caractérisé en ce que** l'élément (54) de sortie de l'unité (50) électromotrice d'entraînement et le troisième piston (37) hydraulique soient reliés l'un à l'autre de façon fixe, du moins pour un mouvement dans la direction axiale, et que soit prévu un dispositif (45) d'accouplement, qui est placé entre un élément (27, 26) du deuxième ensemble (24) piston vérin et le même élément (37, 36), en termes de fonction, du troisième ensemble (25) piston vérin et dont l'un des états permet de bouger les deux pistons (27, 37) hydrauliques des deux ensembles (24, 25) piston vérin par rapport aux corps (26, 36) de vérin et dont l'autre état ne permet de bouger que le piston (37) hydraulique de l'un des ensembles (25) piston vérin par rapport au corps (36) de vérin.

11. Un dispositif d'entraînement selon la revendication n° 10, **caractérisé en ce que** l'élément (54) de sortie de l'unité (50) électromotrice d'entraînement et le troisième piston (37) hydraulique soient reliés l'un à l'autre de façon fixe, du moins pour un mouvement dans la direction axiale, que soit prévu un dispositif (45) d'accouplement, qui, pour une commande du mouvement de l'élément (10) mobile, accouple le deuxième piston (27) hydraulique et le troisième piston (37) hydraulique fixement l'un à l'autre, et que, pour l'exercice de la force élevée, l'accouplement fixe entre le deuxième piston (27) hydraulique et le troisième piston (37) hydraulique puisse être relâché.

12. Un dispositif d'entraînement selon la revendication n° 10 ou n° 11, **caractérisé en ce que** le dispositif (45) d'accouplement comprenne un ressort (46), qui est enserré entre le deuxième piston (27) hydraulique et le troisième piston (37) hydraulique, qu'au moyen du ressort (46) le deuxième piston (27) hydraulique et le troisième piston (37) hydraulique puissent s'appuyer l'un contre l'autre dans la direction axiale et que, lorsque le troisième piston (37) hydraulique et le deuxième piston (27) hydraulique sont en butée l'un contre l'autre dans la direction axiale, la force de précontrainte du ressort (46) soit supérieure à la force de commande nécessaire à la réalisation du mouvement de commande.

13. Un dispositif d'entraînement selon la revendication n° 10 ou n° 11, **caractérisé en ce que** le dispositif (45) d'accouplement soit un accouplement à aimant.

14. Un dispositif d'entraînement selon une revendication précédente, **caractérisé en ce qu'**un dispositif (43, 108, 121) de valves permette de raccorder, par voie fluide, les deux chambres (29, 30) de vérin situées de part et d'autre du deuxième piston (27) hydraulique, l'une à l'autre, et les deux chambres (39, 40) de vérin situées de part et d'autre du troisième piston (37) hydraulique, l'une à l'autre.

15. Un dispositif d'entraînement selon la revendication n° 14, **caractérisé en ce que** le dispositif de valves présente une valve (121), qui permet de raccorder immédiatement, par voie fluide, les deux chambres (16, 17) de vérin situées de part et d'autre du premier piston (14) hydraulique.

16. Un dispositif d'entraînement selon une revendication précédente, **caractérisé en ce que** le moteur (51) électrique puisse entraîner un élément (10) mobile de l'unité de fermeture, au moyen d'un premier dispositif (52) d'accouplement embrayable situé dans une première chaîne de forces, et un élément (66) de l'unité d'injection à faire mouvoir pour l'injection de plastique dans un moule, au moyen d'un deuxième dispositif (53) d'accouplement situé dans une deuxième chaîne de forces, que l'unité (50) électromotrice d'entraînement présente un premier élément (54, 107) de sortie pouvant effectuer un mouvement linéaire et un deuxième élément (55, 99) de sortie pouvant effectuer un mouvement linéaire et que le moteur (51) électrique puisse faire bouger le premier élément (54, 107) de sortie dans un premier sens pour fermer le moule, au moyen du premier dispositif (52) d'accouplement embrayé, et le deuxième élément (55, 99) de sortie dans le même sens ou dans le sens contraire pour injecter du plastique, au moyen du deuxième dispositif (53) d'accouplement embrayé.

17. Un dispositif d'entraînement selon la revendication n° 16, **caractérisé en ce que** le moteur (51) électrique puisse entraîner la vis sans fin dans un mouvement de rotation, au moyen d'un troisième dispositif (95) d'accouplement.

18. Un dispositif d'entraînement selon la revendication n° 17, **caractérisé en ce que** la commande d'un vérin (130) hydraulique de pression de retenue permette de calibrer une pression de retenue dans le plastique plastifié, lorsque le deuxième dispositif (53) d'accouplement est débrayé, et qu'un distributeur (128) permette de commander des cheminements du fluide de pression entre le vérin (130) de pression de retenue et l'accumulateur (118) hydraulique à haute pression et/ou le réservoir (116, 146) à basse pression.

19. Un dispositif d'entraînement selon une revendication précédente, **caractérisé en ce que** la vis (140) sans fin puisse être parcourue dans la direction axiale par un moteur (71) électrique, au moyen d'un entraînement (141, 143) à pas de vis, que soit prévu de façon additionnelle un vérin (82) hydraulique, qui peut exercer une force axiale additionnelle sur la vis (140) sans fin, au moins pendant le processus d'injection, et que le vérin (82) hydraulique puisse être raccordé à un accumulateur (118) hydraulique au moyen d'un distributeur (128).
